# EUROPEAN PATENT SPECIFICATION

(11) **EP 4 263 673 B1**
(45) Date of publication and mention of the grant of the patent: **12.02.2025**
(21) Application number: 21836193.9
(22) Date of filing: 16.12.2021
(51) Int. Cl.: C08G 73/02

(54) **ALKOXYLATED POLYMERIC N-(HYDROXYALKYL)AMINE AS WETTING AGENTS AND AS A COMPONENT OF DEFOAMER COMPOSITIONS**
ALKOXYLIERTE POLYMERE N-(HYDROXYALKYL)AMINE ALS NETZMITTEL UND ALS KOMPONENTE VON ENTSCHÄUMERZUSAMMENSETZUNGEN
POLYMÈRES DE N-(HYDROXYALKYL)AMINE ALCOXYLÉE EN TANT QU' AGENTS MOUILLANTS ET COMPOSANTS DE COMPOSITIONS ANTI-MOUSSE

(30) Priority: 16.12.2020 EP 20214393
(43) Date of publication of application: 25.10.2023
(73) Proprietor: BASF SE, 67056 Ludwigshafen am Rhein (DE)
(72) Inventor: PIRRUNG, Frank, 67056 Ludwigshafen (DE); MUELLER-CRISTADORO, Anna Maria, 49448 Lemfoerde (DE); KNISCHKA, Ralf, 67056 Ludwigshafen (DE); GEYER, Florian Ludwig, 67056 Ludwigshafen (DE)
(74) Representative: BASF IP Association
(86) International application number: PCT/EP2021/086253
(87) International publication number: WO 2022/129368

(56) References cited:
- EP-A1- 2 199 315
- WO-A1-2009/060060
- CA-A1- 2 702 824
- US-A- 4 731 481

## Description

### Field of the invention

The presently claimed invention relates to polymers obtainable by condensing at least one N-(hydroxyalkyl)amine and reacting the condensation product with glycidyl ethers as well as to a process for preparing said polymers. The presently claimed invention further relates to a use of the polymer as a wetting agent and as a component of defoamer compositions. The presently claimed invention further relates to a coating composition comprising the polymer as a wetting agent and to a defoamer composition comprising the polymer.

### Background of the invention

Polymers obtained by condensation of N-(hydroxyalkyl)amine can be used for a wide variety of applications, such as additives for coating compositions, laundry detergents, demulsifiers for oilfield emulsions, viscosity modifiers, wetting agents, thickeners, defoamers and lubricants. These polymers can be used as adhesion promoters (primers), flow improvers or thixotropic agents to produce paints, coatings, adhesives, and sealants as well as can be used as a component of defoamer compositions.

Polyalkanolamines obtained by condensation of N-(hydroxyalkyl)amines in the presence of an acidic or basic catalyst or metal salt have been described in US 2407895A, EP 0441198B1 or US 5393463A.

The use of polyalkanolamines as a demulsifiers for oilfield emulsions has been described in US 4731481A, US 4505839A, US 4840748A or US 4404362A. The use of polyalkanolamines as demulsifiers and defoamers has also been described in EP 0441198B1 and US 5393463A.

Quaternized polydialkanolamines and their use as textile auxiliaries are described in EP 0057398A2 and EP 0160872A2.

Polycationic dye transfer inhibitors based on quaternized polytriethanolamine or polytriisopropanolamine have been described in EP 0934382B1.

Compounds prepared by reaction of polyalkanolamines with xylylene dichloride or bi-glycidyl ether useful as demulsifiers, lubricants or paper auxiliaries have been described in DE 3206459A1 and DE 3136281A1.

Compounds prepared by reaction of polyalkanolamines with urea or urethane derivatives and their use as demulsifiers have been described in EP 0444515B1.

However, it is difficult to obtain a condensation polymer of N-(hydroxyalkyl)amine that has desired characteristics which are suitable for wide variety of applications. Particularly, obtaining N-(hydroxyalkyl)amine condensation polymer having a high molecular weight is difficult. Further, it is a challenge to obtain the polymer having an amphiphilic property.

The condensation of N-(hydroxyalkyl)amine involving loss of 0.5 to 1.5 mole of water per mole of N-(hydroxyalkyl)amine provides a viscous condensation polymer, which is soluble in water. However, the molecular weight and degree of condensation of these condensation polymers are relatively low. When the condensation of N-(hydroxyalkyl)amine is allowed to proceed further, the reaction mixture passes through a highly viscous gel phase which can no longer be technically controlled, and the condensation polymer obtained thereby is completely insoluble in water.

When condensation products of N-(hydroxyalkyl)amine are used as wetting agents, the compositions tend to foam due to their surface activity. The foaming is associated with many disadvantages, especially at a larger scale. Therefore, it is desired that the condensation products of N-(hydroxyalkyl)amine have a low foaming tendency. Further, it is desired that the condensation products of N-(hydroxyalkyl)amine are useful as a component of defoamer compositions.

Accordingly, it is an object of the presently claimed invention to provide a polymer obtainable by condensation of N-(hydroxyalkyl)amine that has desired characteristics such as a high molecular weight, and particularly, a high molecular weight as well as amphiphilic properties so that it is suitable as a wetting agent in water-based coating systems. Further, it is desired that the polymer has a low foaming property. Furthermore, it is desired that the polymer has is useful as a component of defoamer compositions.

### Summary of the invention

Surprisingly, it was found that the polymers of the presently claimed invention have desired properties such as a high molecular weight, a high degree of condensation and an amphiphilic property, and the polymers are suitable for a wide variety of applications. Further, the polymers show a low foaming property.

Thus, an aspect of the presently claimed invention relates to a polymer P obtainable by
(a) self-condensing at least one N-(hydroxyalkyl)amine of formula (I), 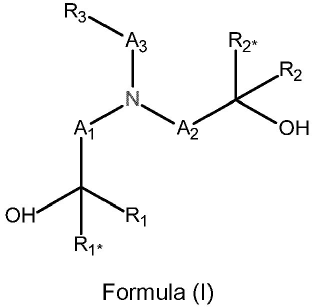 wherein,
   A₁, A₂ and A₃ are identical or different and are selected from unsubstituted, linear or branched C₁-C₄ alkylene,
   R₁, R_{1*}, R₂, and R_{2*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 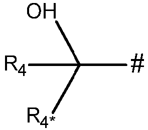 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃,
      to obtain an intermediate (Q);
         or
      co-condensing at least one N-(hydroxyalkyl)amine of formula (I) with Z, wherein Z is at least one compound selected from Z1, Z2 and Z3,
      wherein
      Z1 is at least one diol of formula

         HO-R₈-OH
      wherein R₈ is selected from a linear or branched, substituted or unsubstituted C₂-C₁₈ alkylene and substituted or unsubstituted C₃-C₆ cycloalkylene, and R₈ is optionally substituted with at least one linear or branched C₁-C₃ alkyl, and R₈ is optionally interrupted by oxygen atoms, and
      Z2 is a polyalkyleneoxide selected from polyethyleneoxide, polypropyleneoxide, polytetramethylenether glycol, and copolymers thereof, and having a weight average molecular weight (M_{w}) from 100 to 1500 g/mol,
      Z3 is a polyol of formula

         R₁₁(OH)ₘ,
      wherein m is an integer selected from 3 to 6, and
      R₁₁ is a m-valent linear or branched, substituted or unsubstituted C₃-C₁₀ alkyl, substituted or unsubstituted C₄-C₁₀ cycloalkyl, and linear or branched, substituted or unsubstituted C₇-C₁₀ aralkyl;
      to obtain an intermediate (Q); and
(b) reacting the intermediate (Q) obtained in step (a) with at least one glycidyl ether of the formula (II), 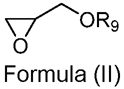 wherein
   R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range of 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

Another aspect of the presently claimed invention relates to a method for preparing the polymer P.

Yet another aspect of the presently claimed invention relates to the use of the polymer P as a wetting agent.

Yet another aspect of the presently claimed invention relates to the use of the polymer P as a defoamer.

Yet another aspect of the presently claimed invention relates to the use of the polymer P in a coating composition.

Yet another aspect of the presently claimed invention relates to the use of the polymer P in a defoamer composition.

Yet another aspect of the presently claimed invention is a defoamer composition comprising the polymer P as described herein above.

Yet another aspect of the presently claimed invention is a coating composition comprising the polymer P as described herein above.

Yet another aspect of the presently claimed invention relates to an article coated with the coating composition comprising polymer P.

The polymers of the presently claimed invention have a high molecular weight, amphiphilic properties, a low critical aggregation concentration (CAC), enhanced wetting properties and low foaming properties. Accordingly, they can be used as wetting agents in water-based coating compositions. They are also useful as as a component of defoamer compositions.

### Detailed Description

Before the present compositions and formulations of the presently claimed invention are described, it is to be understood that this invention is not limited to particular compositions and formulations described, since such compositions and formulation may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well i.e. a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

Surprisingly, it was found that the polymers of the presently claimed invention have desired properties such as a high molecular weight, a high degree of condensation and amphiphilic properties that render the polymers useful for wide variety of applications.

The polymers have amphiphilic properties and enhanced wetting properties; hence they are useful as wetting agents in water-based coating compositions. The coating compositions comprising the polymers of the presently claimed invention have excellent binding or adhesion properties. Further, it was found that the polymers are also useful as a component of defoamer compositions.

The polymers of the presently claimed invention are alkoxylated polymeric N-(hydroxyalkyl)amines prepared by reaction of N-(hydroxyalkyl)amine condensation products with glycidyl ethers. The N-(hydroxyalkyl)amine condensation products include the polymer obtained by condensation of N-(hydroxyalkyl)amine alone and co-polymer obtained by condensation of N-(hydroxyalkyl)amine and other monomer/s. The glycidyl ether reacts at the hydroxy groups present in the N-(hydroxyalkyl)amine condensation product.

The nucleophilic ring opening of epoxides takes place by the attack of oxygen nucleophiles present in the N-(hydroxyalkyl)amine condensation product and the reaction provides a product bearing a hydroxyl group on account of the epoxide opening. The hydroxy group bearing product, thus obtained, in turn can undergo further reaction with another epoxide molecule. Thus, the sequential reaction with epoxide continues till the glycidyl ether is completely consumed.

The molecular weight of the polymers of the presently claimed invention can be controlled by using right amount of the glycidyl ether. Thus, polymers having a high molecular weight can be obtained by using a high amount of the glycidyl ether. The properties of the polymer of the presently claimed invention can be controlled by selecting an appropriate glycidyl ether bearing suitable hydrophilic or hydrophobic group and by using its appropriate amount.

Accordingly, an aspect of the presently claimed invention is directed to a polymer P obtainable by
(a) self-condensing at least one N-(hydroxyalkyl)amine of formula (I), 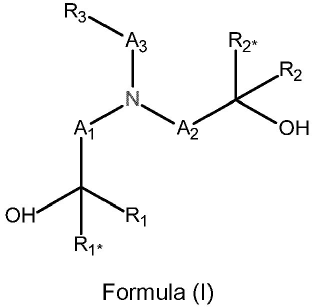 wherein,
   A₁, A₂ and A₃ are identical or different and are selected from unsubstituted, linear or branched C₁-C₄ alkylene,
   R₁, R_{1*}, R₂, and R_{2'*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 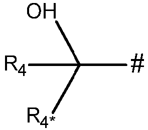 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃,
      to obtain an intermediate (Q);
         or
      co-condensing at least one N-(hydroxyalkyl)amine of formula (I) with Z, wherein Z is at least one compound selected from Z1, Z2, and Z3,
      wherein
      Z1 is at least one diol of formula

         HO-R₈-OH
      wherein R₈ is selected from a linear or branched, substituted or unsubstituted C₂-C₁₈ alkylene and substituted or unsubstituted C₃-C₆ cycloalkylene, and R₈ is optionally substituted with at least one linear or branched C₁-C₃ alkyl, and R₈ is optionally interrupted by oxygen atoms,
      Z2 is a polyalkyleneoxide selected from polyethyleneoxide, polypropyleneoxide, polytetramethylenether glycol and copolymers thereof, and having a weight average molecular weight (M_{w}) from 100 to 1500 g/mol, and
      Z3 is a polyol of formula

         R₁₁(OH)ₘ,
      wherein m is an integer selected from 3 to 6, and
      R₁₁ is a m-valent linear or branched, substituted or unsubstituted C₃-C₁₀ alkyl, substituted or unsubstituted C₄-C₁₀ cycloalkyl, and linear or branched, substituted or unsubstituted C₇-C₁₀ aralkyl;
      to obtain an intermediate (Q); and
(b) reacting the intermediate (Q) obtained in step (a) with at least one glycidyl ether of the formula (II), 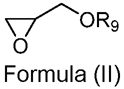 wherein
   R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range of 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

Within the context of the presently claimed invention, the term alkyl, as used herein, refers to an acylic saturated aliphatic hydrocarbon radicals, including linear alkyl saturated hydrocarbon radical denoted by a general formula CₙH₂ₙ₊₁ and wherein n is the number of carbon atoms 1, 2, 3, 4 etc. Examples of such preferred alkyl radicals are methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl and icosyl. The term substituted alkyl refers to an alkyl radical, wherein a part or all the hydrogen atoms are replaced by substituent/s, preferably the substituents are selected from hydroxy, halogen, cyano, C₁-C₄-alkyl and C₁-C₄-alkoxy.

Within the context of the presently claimed invention, the term cycloalkyl, as used herein refers to saturated or partially unsaturated mono- or bicyclic hydrocarbon radicals. Preferably the term cycloalkyl relates to monocyclic hydrocarbon radicals having 3 to 8, preferably 3 to 6 carbon atoms (C₃-C₈-cycloalkyl, C₃-C₆-cycloalkyl). Examples of such preferred cycloalkyl radicals are cyclopropyl, cyclobutyl, cyclopentyl, cyclohexyl, cycloheptyl and cyclooctyl. The term substituted cycloalkyl refers to a cycloalkyl radical wherein a part or all the hydrogen atoms are replaced by substituents, preferably the substituents are selected from hydroxy, halogen, cyano, C₁-C₄-alkyl or C₁-C₄-alkoxy. Preferably cycloalkyl is unsubstituted or carries 1, 2 or 3 C₁-C₄-alkyl radicals.

Within the context of the presently claimed invention, the term aryl, as used herein, refers to phenyl or naphthyl, preferably phenyl. The term substituted aryl refers to an aryl radical wherein a part or all the hydrogen atoms are replaced by substituent/s, preferably the substituents are selected from hydroxy, halogen, cyano, C₁-C₄-alkyl and C₁-C₄-alkoxy. Preferably aryl is unsubstituted or carries 1, 2 or 3 substituents.

Within the context of the presently claimed invention, the term alkylene, as used herein, refers to a saturated, divalent, linear or branched hydrocarbon radical. Examples of such preferred alkylene radicals include methylene, ethane-1,2-diyl, propane-1,3-diyl, propane-1,2-diyl, 2-methylpropane-1,2-diyl, 2,2-dimethylpropane-1,3-diyl, butane-1,4-diyl, butane-1,3-diyl (= 1-methyl-propane-1,3-diyl), butane-1,2-diyl, butane-2,3-diyl, 2-methyl-butan-1,3-diyl, 3-methyl-butan-1,3-diyl (=1 ,1-dimethylpropane-1,3-diyl), pentane-1,4-diyl, pentane-1,5-diyl, pentane-2,5-diyl, 2-methylpentane-2,5-diyl (= 1,1-dimethylbutane-1,3-diyl) and hexane-1,6-diyl.

Within the context of the presently claimed invention, the term glycidyl epoxide, as used herein, refers to ether compounds bearing glycidyl (3-propane-2,3-epoxy) radical and an alkyl or alkylaryl radical. Examples of alkyl glycidyl ethers are hexyl glycidyl ether (= 1-hexyloxy-2,3-epoxypropane), octyl glycidyl ether (= 1-octyloxy-2,3-epoxypropane) and n-decyl glycidyl ether (= 1-decyloxy-2,3-epoxypropane). An example of alkylaryl glycidyl epoxide is benzyl glycidyl ether.

The term "condensation" as used herein refers to a chemical reaction wherein a covalent bond between two corresponding functional groups is formed together with the formal loss of a small molecule such as water. Preferably the term condensation refers to an etherification together with a dehydration reaction.

The term 'self-condensing', as used herein refers to condensation reaction carried out with a single monomer, i.e. N-(hydroxyalkyl)amine of formula (I).

The term 'co-condensing', as used herein refers to the condensation reaction carried out with two or more monomers, one monomer being N-(hydroxyalkyl)amine of formula (I) and other monomer being a compound such as a diol, a polyol or a polyethyleneoxide.

In a preferred embodiment, the polymer P is obtainable by
(a) self-condensing at least one N-(hydroxyalkyl)amine of formula (I), 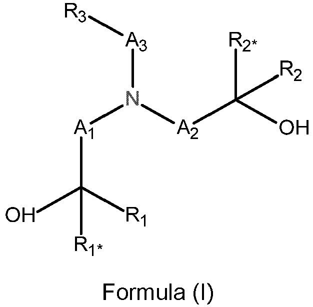 wherein,
   A₁, A₂ and A₃ are identical or different and are selected from unsubstituted, linear or branched C₁-C₄ alkylene,
   R₁, R_{1*}, R₂, and R_{2'*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 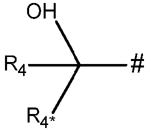 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃,
      to obtain an intermediate (Q); and
(b) reacting the intermediate (Q) obtained in step (a) with at least one glycidyl ether of the formula (II), 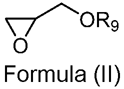 wherein
   R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range from 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

In a preferred embodiment, the polymer P is obtainable by
(a) co-condensing at least one N-(hydroxyalkyl)amine of formula (I) with Z1, 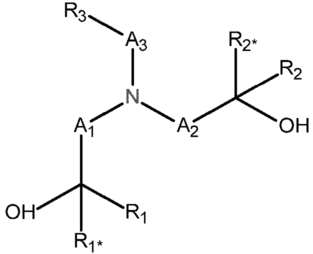 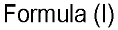 wherein,
   A₁, A₂ and A₃ are identical or different and are selected from unsubstituted, linear or branched C₁-C₄ alkylene,
   R₁, R_{1*}, R₂, and R_{2'*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 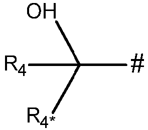 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃; and
      Z1 is at least one diol of formula

         HO-R₈-OH
      wherein R₈ is selected from a linear or branched, substituted or unsubstituted C₂-C₁₈ alkylene and substituted or unsubstituted C₃-C₆ cycloalkylene and R₈ is optionally substituted with at least one linear or branched C₁-C₃ alkyl, and R₈ is optionally interrupted by oxygen atoms,
      to obtain an intermediate (Q); and
(b) reacting the intermediate (Q) obtained in step (a) with at least one glycidyl ether of the formula (II), 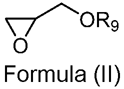 wherein
   R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range from 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

In a preferred embodiment, the weight ratio of the amount of at least one N-(hydroxyalkyl)amine of formula (I) and the amount of Z1 is in the range of 4:1 to 10:1, and more preferably in the range of 1:1 to 10:1.

In a preferred embodiment, the polymer P is obtainable by
(a) co-condensing at least one N-(hydroxyalkyl)amine of formula (I) with Z2, 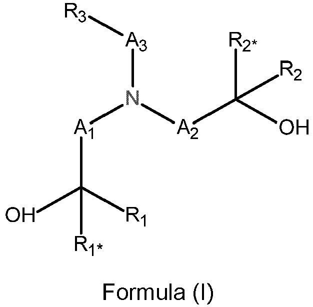 wherein,
   A₁, A₂ and A₃ are identical or different and are selected from unsubstituted, linear or branched C₁-C₄ alkylene,
   R₁, R_{1*}, R₂, and R_{2'*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 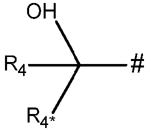 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃; and
      Z2 is a polyalkyleneoxide selected from polyethyleneoxide, polypropyleneoxide, polytetramethylenether glycol and copolymers thereof, and having a weight average molecular weight (M_{w}) from 100 to 1500 g/mol, to obtain an intermediate (Q); and
(b) reacting the intermediate (Q) obtained in step (a) with at least one glycidyl ether of the formula (II), 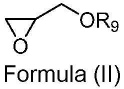 wherein R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range from 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

In a preferred embodiment, the weight ratio of the amount of at least one N-(hydroxyalkyl)amine of formula (I) and the amount of Z2 is in the range of 4:1 to 10: 1, and more preferably in the range of 1:1 to 10:1.

In a preferred embodiment, the polymer P is obtainable by
(a) co-condensing at least one N-(hydroxyalkyl)amine of formula (I) with Z3, 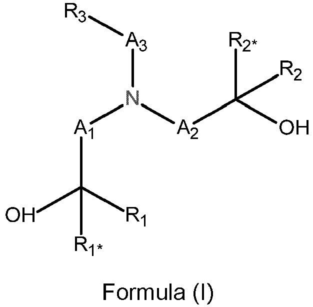 wherein,
   A₁, A₂ and A₃ are identical or different and are selected from unsubstituted, linear or branched C₁-C₄ alkylene,
   R₁, R_{1*}, R₂, and R_{2'*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
   R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 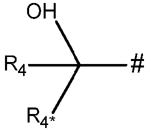 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃; and
      Z3 is a polyol of formula

         R₁₁(OH)ₘ,
      wherein m is an integer selected from 3 to 6, and
      R₁₁ is a m-valent linear or branched, substituted or unsubstituted C₃-C₁₀ alkyl, substituted or unsubstituted C₄-C₁₀ cycloalkyl, and linear or branched, substituted or unsubstituted C₇-C₁₀ aralkyl;
      to obtain an intermediate (Q); and
(b) reacting the intermediate (Q) obtained in step (a) with at least one glycidyl ether of the formula (II), 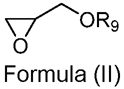 wherein
   R₉ is a linear or branched, substituted or unsubstituted C₆-C₂₀ alkyl;
   wherein, in step (b) the ratio of moles of hydroxy-groups of intermediate (Q) calculated on the basis of its hydroxyl number to moles of the at least one glycidyl ether of the formula (II) is in the range from 0.03:1 to 1:3; and
   wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

In a preferred embodiment, the weight ratio of the amount of at least one N-(hydroxyalkyl)amine of formula (I) and the amount of Z3 is in the range of 4:1 to 10:1, and more preferably in the range of 1:1 to 10:1.

In a preferred embodiment, the intermediate (Q) is obtainable by co-condensing at least one N-(hydroxyalkyl)amine of formula (I) with Z, wherein Z is a mixture of two or more compounds selected from Z1, Z2 and Z3, and wherein at least one N-(hydroxyalkyl)amine of formula (I), Z, Z1, Z2 and Z3 are as defined above.

In a preferred embodiment, the weight ratio of the amount of at least one N-(hydroxyalkyl)amine of formula (I) and the amount of Z is in the range of 4:1 to 10:1, and more preferably in the range of 1:1 to 10:1.

In a more preferred embodiment, the intermediate (Q) is obtainable by co-condensing at least one N-(hydroxyalkyl)amine of formula (I) with Z, wherein Z is a mixture of Z1 and Z2. Z comprises Z1 in the range from 5 to 95 wt%, and Z2 in the range from 5 to 95 wt%, each based on the total weight of Z.

### 1) Condensation product - Intermediate Q

The condensation product - intermediate Q is obtained by condensation of at least one N-(hydroxyalkyl)amine of the formula (I).

In a preferred embodiment, the at least one N-(hydroxyalkyl)amine of the formula (I) comprises N-(hydroxyalkyl)amine of formula (Ia).

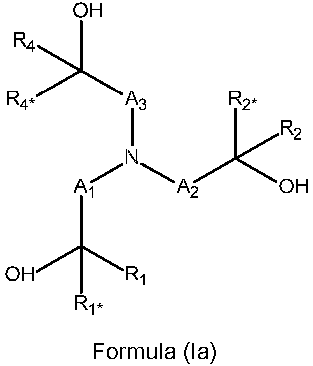

In a preferred embodiment, the at least one N-(hydroxyalkyl)amine of the formula (I) is a mixture comprising N-(hydroxyalkyl)amines of formulae (Ia) and/or (Ib), 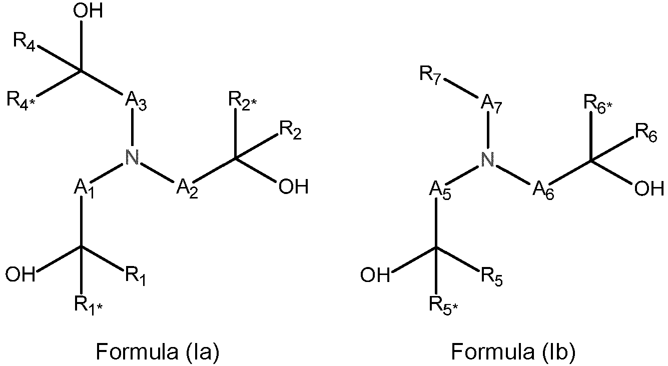 wherein
A₅, A₆ and A₇ are identical or different and are selected from unsubstituted C₁-C₄ alkylene, R₅, R_{5*}, R₆ and R_{6*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, R₇ is selected from hydrogen, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
wherein the amount of the N-(hydroxyalkyl)amine of formula (Ia) is in the range of 70 to 100 wt% and the amount of the N-(hydroxyalkyl)amine of formula (Ib) is in the range of 0 to 30 wt%, each based on the total weight of N-(hydroxyalkyl)amine of formula (I).

In a preferred embodiment, the N-(hydroxyalkyl)amines of formula (I) is a mixture comprising N-(hydroxyalkyl)amines of formulae (Ia) and (Ib), wherein the amount of the N-(hydroxyalkyl)amine of formula (Ia) is in the range of 30 to 99 wt% and the amount of the N-(hydroxyalkyl)amine of formula (lb) is in the range of 1 to 70 wt%, each based on the total weight of N-(hydroxyalkyl)amine of formula (I).

In a more preferred embodiment, the N-(hydroxyalkyl)amines of formula (I) is a mixture comprising N-(hydroxyalkyl)amines of formulae (Ia) and (Ib), wherein the amount of the N-(hydroxyalkyl)amine of formula (Ia) is in the range of 70 to 95 wt% and the amount of the N-(hydroxyalkyl)amine of formula (Ib) is in the range of 5 to 30 wt%, each based on the total weight of N-(hydroxyalkyl)amine of formula (I).

In a preferred embodiment, A₁, A₂ and A₃ are identical or different and are selected from the group consisting of methylene, ethylene, n-propylene, n-butylene, isopropyl, 1-methyl propyl and 2-methyl propyl.

In a preferred embodiment, A₁, A₂ and A₃ are substituted alkyl, wherein 1, 2 or 3 hydrogens are replaced by substituent/s selected hydroxy, halogen, cyano-C₁-C₄-alkyl and C₁-C₄-alkoxy.

In a more preferred embodiment, A₁, A₂ and A₃ are identical and are selected from the group consisting of methylene, ethylene, n-propylene and isopropylene.

In a most preferred embodiment, A₁, A₂ and A₃ are methylene.

In a preferred embodiment, R₁, R_{1*}, R₂, and R_{2*} are identical or different and are selected from hydrogen, methyl, ethyl, propyl, butyl, isopropyl, 1-methyl propyl, 2-methyl propyl, cyclopropyl, cyclobutyl, cyclopentyl, cyclohexyl, phenyl, naphthyl, benzyl, 2-phenylethyl, 3-phenylpropyl, 4-phenylbutyl, 1-methyl-2-phenylethyl, 1-methyl-3-phenylpropyl, 2-methyl-3-phenylpropyl, and methyl naphthyl.

In a more preferred embodiment, R₁, R_{1*}, R₂, and R_{2*} are identical or different and are selected from H and methyl.

In a most preferred embodiment, R₁, R_{1*}, R₂, and R_{2*} are H.

In a most preferred embodiment, R₁ and R₂ are methyl, and R_{1*} and R_{2*} are hydrogen.

In a preferred embodiment, R₃ is selected from hydrogen, methyl, ethyl, propyl, butyl, isopropyl, 1-methyl propyl, 2-methyl propyl, cyclopropyl, cyclobutyl, cyclopentyl, cyclohexyl, phenyl, naphthyl, benzyl, 2-phenylethyl, 3-phenylpropyl, 4-phenylbutyl, 1-methyl-2-phenylethyl, 1-methyl-3-phenylpropyl, 2-methyl-3-phenylpropyl, and methyl naphthyl.

In a more preferred embodiment, R₃ is 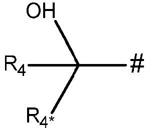 wherein R₄ and R_{4*} are identical or different and are selected from H and methyl.

In a most preferred embodiment, R₄ and R_{4*} are H, and hence R₃ is -CH₂OH.

In a most preferred embodiment, R₄ is H and R_{4*} is methyl, and hence R₃ is -CH(CH₃)OH.

In a preferred embodiment, R₅, R_{5*}, R₆, and R_{6*} are identical or different and are selected from hydrogen, methyl, ethyl, propyl, butyl, isopropyl, 1-methyl propyl, 2-methyl propyl, cyclopropyl, cyclobutyl, cyclopentyl, cyclohexyl, phenyl, naphthyl, benzyl, 2-phenylethyl, 3-phenylpropyl, 4-phenylbutyl, 1-methyl-2-phenylethyl, 1-methyl-3-phenylpropyl, 2-methyl-3-phenylpropyl, and methyl naphthyl.

In a more preferred embodiment, R₅, R_{5*}, R₆, and R_{6*} are identical or different and are selected from hydrogen and methyl.

The condensation product - intermediate Q is also obtainable by co-condensation of at least one N-(hydroxyalkyl)amine of formula (I) with Z, wherein Z is at least one compound selected from Z1, Z2 and Z3.

Z1 is at least one diol of formula HO-R₈-OH, wherein R₈ is as defined above.

In a preferred embodiment, R₈ is at least one selected from ethylene, propylene, butylene, pentylene, hexylene, heptylene, octylene, nonylene, decylene, undecylene, dodecylene, tridecylene, tetradecylene, pentadecylene, hexadecylene, heptadecylene, octadecylene, 1-ethyl propylene, 2-methyl butylene, 1-methyl pentylene, 2-methyl pentylene, 3-methyl pentylene, 1-ethyl butylene, 2-ethyl butylene, 1-ethyl pentylene, 2-ethyl pentylene, 3-ethyl pentylene, 1-ethyl hexylene, 2-ethyl hexylene, 3-ethyl hexylene, 4-ethyl hexylene, 1-ethyl heptylene, 2-ethyl heptylene, 3-ethyl heptylene, 4-ethyl heptylene, 5-ethyl heptylene, 1-ethyl octylene, 2-ethyl octylene, 3-ethyl octylene, 4-ethyl octylene, 5-ethyl octylene, 6-ethyl octylene, 2,2-dimethylpropylene, 1-propyl butylene, 1-propyl pentylene, 2-propyl pentylene, 1,4-dihydroxycyclohexane, and -CH₂CH₂-(OCH₂CH₂-)ₙ-CH₂CH₂-, wherein n is in the range from 3 to 10; more preferably selected from the group consisting of ethylene, propylene, butylene, pentylene, hexylene, heptylene, octylene, nonylene, decylene, undecylene, dodecylene, 2,2-dimethylpropylene, 2-ethyl hexylene, 1,4-dihydroxycyclohexane, and -CH₂CH₂-(OCH₂CH₂-)ₙ-CH₂CH₂-, wherein n is in the range from 3 to 10; even more preferably selected from ethylene, propylene, butylene, pentylene, hexylene, heptylene, octylene, 2,2-dimethylpropylene, 2-ethyl hexylene, 1,4-dihydroxycyclohexane and -CH₂CH₂-(OCH₂CH₂-)ₙ-CH₂CH₂-, wherein n is in the range from 3 to 10.

In a most preferred embodiment, R₈ is hexylene.

In a preferred embodiment, the at least one N-(hydroxyalkyl)amine of formula (I) is co-condensed with Z2.

In a preferred embodiment, Z2 is polyethyleneoxide having a weight average molecular weight (M_{w}) from 100 to 500 g/mol.

In a preferred embodiment, Z2 is polyethyleneoxide having a weight average molecular weight of 200 g/mol.

In a preferred embodiment, Z2 is polyepropyleneoxide having a weight average molecular weight (M_{w}) from 100 to 500 g/mol.

In a preferred embodiment, Z2 is polytetramethylenether glycol having a weight average molecular weight (M_{w}) from 200 to 1500 and more preferably from 200 to 1200 g/mol.

Polytetramethylenether glycol is OHCH₂CH₂CH₂CH₂-(OCH₂CH₂CH₂CH₂-)ₙ-CH₂CH₂CH₂CH₂OH, wherein n is in the range from 3 to 16.

In a preferred embodiment, Z2 is a polyoxyalkyleneoxide copolymer comprising two or more polymers elected from polyethyleneoxide, polypropyleneoxide and polytetramethylenether glycol. The copolymer can be random copolymer, gradient copolymer or block copolymer.

In a preferred embodiment, the at least one N-(hydroxyalkyl)amine of formula (I) is co-condensed with Z3.

In a preferred embodiment, Z3 is a polyol of formula

R₁₁(OH)ₘ,

wherein m is an integer selected from 3 to 6, and
R₁₁ is a m-valent linear or branched, substituted or unsubstituted C₃-C₁₀ alkyl.

In a preferred embodiment, Z3 is at least one polyol selected from glycerol, tri(hydroxymethyl)ethane, tri(hydroxymethyl)propane, butane-1,2,3-triol, hexane-1,3,5-triol, pentaerythritol, hexane-2,3,4,5-tetraol, butan-1,2,3,4-tetraol, 6-methylheptane-1,2,3,4,5-pentaol, pentane-1,1,2,3,4,5-hexaol, sorbitol (hexane-1,2,3,4,5,6-hexaol), tris(2-hydroxyethyl)isocyanurate, tris(2-hydroxypropyl)isocyanurate, tris(2-hydroxybutyl)isocyanurate and tris(hydroxymethyl)isocyanurate.

In a preferred embodiment, the intermediate (Q) is obtainable by co-condensing at least one N-(hydroxyalkyl)amine of formula (I) with Z, wherein Z is a mixture of two or more compounds selected from Z1, Z2 and Z3, and wherein the at least one N-(hydroxyalkyl)amine of formula (I), Z, Z1, Z2 and Z3 are as defined above.

In a preferred embodiment, the weight ratio of the amount of at least one N-(hydroxyalkyl)amine of formula (I) and the amount of Z is in the range of 4:1 to 10:1, and more preferably in the range of 1:1 to 10:1.

In a more preferred embodiment, the intermediate (Q) is obtainable by co-condensing at least one N-(hydroxyalkyl)amine of formula (I) with Z, wherein Z is a mixture of Z1 and Z2. Z comprises Z1 in the range from 5 to 95 wt%, and Z2 in the range from 5 to 95 wt%, each based on the total weight of Z.

### 2) Glycidyl ether

The selection of glycidyl ether is important for the polymer of the present disclosure. A polymer obtained by reaction with a glycidyl ether of the formula (II) having R₉ as a linear or branched, substituted or unsubstituted C₆-C₂₀ alkyl group provides desired properties to the polymer.

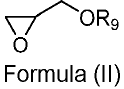

A polymer obtained by reaction with a glycidyl ether bearing R₉ as a lower alkyl group provides polymer having a higher water solubility, which makes the polymer unsuitable as a wetting agent and a defoamer. Similarly, a polymer obtained by reaction with a glycidyl ether bearing an alkyl chain higher than C₂₀ provides a polymer that has high hydrophobicity and lack desired amphiphilicity, which makes the polymer unsuitable for the desired purpose. Therefore, selection of glycidyl ether with optimal alkyl chain is important for obtaining polymer having suitable activity as a wetting agent and a defoamer.

In a preferred embodiment, R₉ is selected from the group consisting of hexyl, heptyl, octyl, nonyl, decyl, undecyl, dodecyl, tridecyl, tetradecyl, pentadecyl, hexadecyl, heptadecyl, octadecyl, nonadecyl, icosyl, 1-methyl pentyl, 2-methyl pentyl, 3-methyl pentyl, 4-methyl pentyl, 1-methyl hexyl, 2-methyl hexyl, 3-methyl hexyl, 4-methyl hexyl, 5-methyl hexyl, 1-methyl heptyl, 2-methyl heptyl, 3-methyl heptyl, 4-methyl heptyl, 5-methyl heptyl, 6-methyl heptyl, 1-methyl octyl, 2-methyl octyl, 3-methyl octyl, 4-methyl octyl, 5-methyl octyl, 6-methyl octyl, 7-methyl octyl, 1-methyl nonyl, 2-methyl nonyl, 3-methyl nonyl, 4-methyl nonyl, 5-methyl nonyl, 6-methyl nonyl, 7-methyl nonyl, 8-methyl nonyl, 1-ethyl butyl, 2-ethyl butyl, 1-ethyl pentyl, 2-ethyl pentyl, 3-ethyl pentyl, 1-ethyl hexyl, 2-ethyl hexyl, 3-ethyl hexyl, 4-ethyl hexyl, 1-ethyl heptyl, 2-ethyl heptyl, 3-ethyl heptyl, 4-ethyl heptyl, 5-ethyl heptyl, 1-ethyl octyl, 2-ethyl octyl, 3-ethyl octyl, 4-ethyl octyl, 5-ethyl octyl, 6-ethyl octyl, 1-propyl butyl, 1-propyl pentyl, 2-propyl pentyl, 1-propyl hexyl, 2-propyl hexyl, 3-propyl hexyl, 1-propyl heptyl, 2-propyl heptyl, 3-propyl heptyl, 4-propyl heptyl, 1-propyl octyl, 2-propyl octyl, 3-propyl octyl, 4-propyl octyl, 5-propyl octyl, 1-propyl nonyl, 2-propyl nonyl, 3-propyl nonyl, 4-propyl nonyl, 5-propyl nonyl and 6-propyl nonyl.

In a preferred embodiment, R₉ is at least one selected from hexyl, heptyl, octyl, nonyl, decyl, undecyl, dodecyl, tridecyl, tetradecyl, pentadactyl, hexadecyl and octadecyl.

In a more preferred embodiment, R₉ is at least one selected from octyl, decyl, dodecyl, tridecyl, tetradecyl, pentadecyl and hexadecyl.

In a more preferred embodiment, polymer P is obtainable by reacting the intermediate (Q) obtained in step (a) with a mixture comprising two or more glycidyl ethers of the formula (II).

In a more preferred embodiment, polymer P is obtainable by reacting the intermediate (Q) obtained in step (a) with a mixture comprising dodecyl glycidyl ether and tetradecyl glycidyl ether.

In a more preferred embodiment, polymer P is obtainable by reacting the intermediate (Q) obtained in step (a) with a mixture comprising dodecyl glycidyl ether, tetradecyl glycidyl ether and 2-ethylhexyl glycidyl ether.

Commercially available mixtures of glycidyl ethers are also useful for the reaction with Q. The commercially available mixtures comprise 2 to 5 glycidyl ethers in amounts of at least 5 wt% of the mixture. The major glycidyl ether may be present in an amount of at least 50 wt% of the mixture. The sum of amounts of two major glycidyl ethers may be at least 75 wt% of the mixture.

In a preferred embodiment, the polymer P is obtainable by reacting the intermediate (Q) obtained in step (a) with at least one glycidyl ether of the formula (II), 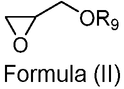 and at least one diglycidyl ether of formula (Ila) 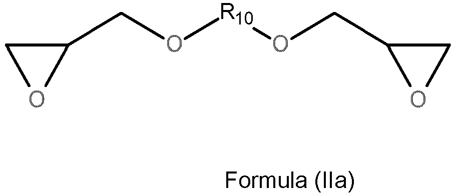
wherein, R₁₀ is a linear or branched, substituted or unsubstituted C₃-C₂₀ alkylene, substituted or unsubstituted C₃-C₆ cycloalkylene, and substituted or unsubstituted C₆-C₁₈ aryl; and
the amount of the at least one diglycidyl ether of formula (IIa) is in the range of 1 to 20 wt% with respect to the amount of the glycidyl ether of the formula (II).

In a preferred embodiment, R₁₀ is at least one selected from the group consisting of propylene, butylene, pentylene, hexylene, octylene, decylene, 2,2-dimethylpropylene, 1,4-dicychohexylene, 1,4-cyclohexanedimethylyl, polyethylene glycol, polypropylene glycol and p,p-Isopropylidenebisphenyl.

In a preferred embodiment, the amount of the at least one diglycidyl ether of formula (IIa) is in the range of 1 to 20 wt% with respect to the amount of the glycidyl ether of the formula (II).

In a preferred embodiment, in step (b) the ratio of moles of hydroxy-groups of intermediate (Q) calculated on the basis of its hydroxyl number to moles of the at least one glycidyl ether of the formula (II) is in the range of 0.03:1 to 1:3; more preferably in the range of 0.1 to 1:2.5; most preferably in the range of 0.2 to 2.0; and even more preferably in the range of 0.5 to 1.5.

In a preferred embodiment, the polymer P is obtainable by
(a) self-condensing the at least one N-(hydroxyalkyl)amine of formula (I), 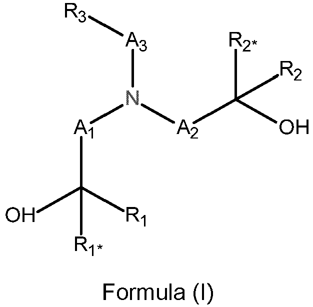 wherein
   R₁, R_{1*}, R₂, and R_{2'*} are selected from H and methyl,
   R₃ is selected from H, methyl, and 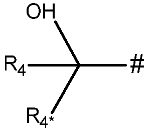 wherein R₄ and R_{4*} are identical or different and are selected from H and methyl; and
   A₁, A₂ and A₃ are identical and are selected from methylene, ethylene, n-propylene and isopropylene, to obtain intermediate Q; and
(b) reacting the intermediate Q obtained in step (a) with the at least one glycidyl ether of formula (II), 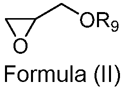 wherein
   R₉ is selected from hexyl, heptyl, octyl, nonyl, decyl, undecyl, dodecyl, tridecyl, tetradecyl, pentadecyl, hexadecyl and octadecyl.

In a preferred embodiment, the at least one N-(hydroxyalkyl)amine of formula (I) is triethanolamine.

In a preferred embodiment, the at least one N-(hydroxyalkyl)amine of formula (I) is triisopropanolamine.

In a preferred embodiment, the polymer P is obtainable by
(a) self-condensing triethanolamine to obtain intermediate Q
   having a degree of polymerization in the range of 3 to 300, calculated on the basis of its hydroxy number or the amount of water collected during the condensation, and
(b) reacting intermediate Q with a mixture of glycidyl ethers comprising glycidyl ethers of formula (Ilp) and formula (Ilq) to obtain polymer P,

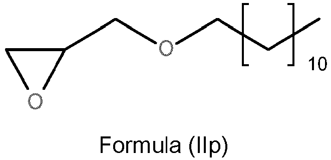

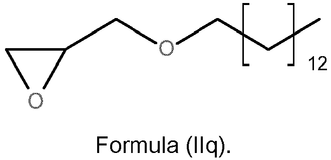

In a preferred embodiment, the polymer P is obtainable by
(a) co-condensing triethanolamine and 1,6-hexanediol to obtain intermediate Q
   having a degree of polymerization in the range of 3 to 300, calculated on the basis of its hydroxy number or the amount of water collected during the condensation,
   wherein the molar ratio of triethanolamine to 1 ,6-hexanediol is 2:1;
      and
(b) reacting intermediate Q with a mixture of glycidyl ethers comprising glycidyl ethers of formula (Ilp) and formula (Ilq) to obtain polymer P,

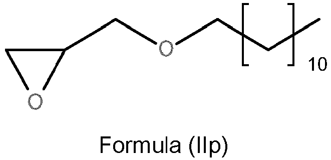

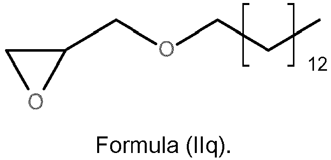

In a preferred embodiment, the polymer P is obtainable by
(a) co-condensing triethanolamine and polyethyleneglycol (having M_{w} = 200) to obtain intermediate Q having a degree of polymerization in the range of 3 to 300, calculated on the basis of its hydroxy number or the amount of water collected during the condensation,
   wherein the molar ratio of triethanolamine to polyethyleneglycol (having M_{w} = 200) is 7:3; and
(b) reacting intermediate Q with a mixture of glycidyl ethers comprising glycidyl ethers of formula (Ilp) and formula (Ilq) to obtain polymer P,

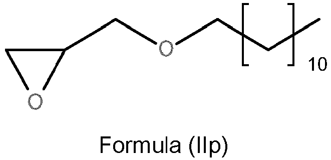

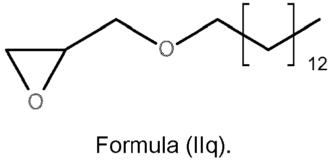

In a preferred embodiment, the polymer P is obtainable by
(a) self-condensing triethanolamine to obtain intermediate Q, having a degree of polymerization in the range of 3 to 300, calculated on the basis of its hydroxy number or the amount of water collected during the condensation, and
(b) reacting intermediate Q of formula (III) with a mixture of glycidyl ethers comprising glycidyl ethers of formula (Ilp), (IIq) and (IIr) to obtain polymer P,

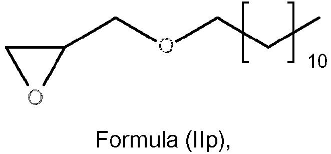

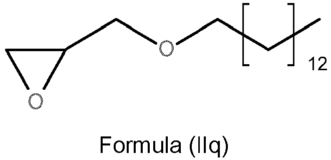

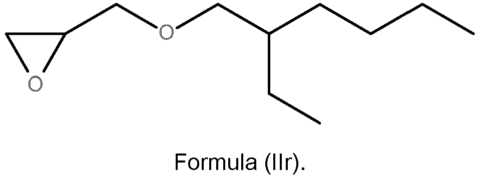

In a preferred embodiment, the dynamic surface tension of polymer P at 0.5 wt% concentration in a solution of butyl glycol and water (1:19) is at 100 ms is in the range of from 25 to 35 mN/m, as determined with a bubble tensiometer.

Another aspect of the presently claimed invention is directed to a method for preparing the polymer P of the presently claimed invention, the method comprises at least the steps of,
(i) self-condensing the at least one N-(hydroxyalkyl)amine of formula (I) at a temperature in the range of 180 to 220 °C to obtain an intermediate (Q), or co-condensing at least one N-(hydroxyalkyl)amine (I) with Z, wherein Z is at least one compound selected from Z1, Z2 and Z3 at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z1, Z2 and Z3 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) self-condensing the at least one N-(hydroxyalkyl)amine of formula (I) at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) co-condensing at least one N-(hydroxyalkyl)amine (I) with Z1 at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z1 is as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) co-condensing at least one N-(hydroxyalkyl)amine (I) with Z2 at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z2 is as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) co-condensing at least one N-(hydroxyalkyl)amine (I) with Z3 at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z3 is as defined above,
wherein the weight ratio of the total amount of the at least one N-(hydroxyalkyl)amine of for-mula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) co-condensing at least one N-(hydroxyalkyl)amine (I) with Z, wherein Z is a mixture comprising two or more compounds selected from Z1, Z2 and Z3 at a temperature in the range of 180 to 220 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z1, Z2 and Z3 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a preferred embodiment, the method for preparing the polymer P comprises at least the steps of,
(i) co-condensing at least one N-(hydroxyalkyl)amine (I) with Z, wherein Z is a mixture comprising Z1 and Z2 at a temperature in the range of 180 to 220 °C to obtain an intermediate (Q), wherein the amount of Z1 is in the range of 10 to 90 wt%, and the amount of Z2 is 10 to 90 wt%, both based on the total weight of the mixture;
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z1 and Z2 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a more preferred embodiment, the method for preparing the polymer P comprises at least the steps of,
(i) co-condensing at least one N-(hydroxyalkyl)amine (I) with Z, wherein Z is a mixture comprising Z1 and Z3 at a temperature in the range of 180 to 220 °C to obtain an intermediate (Q), wherein the amount of Z1 is in the range of 10 to 90 wt%, and the amount of Z3 is 10 to 90 wt%, both based on the total weight of the mixture;
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z1 and Z3 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a more preferred embodiment, the method for preparing the polymer P comprises at least the steps of,
(i) co-condensing at least one N-(hydroxyalkyl)amine (I) with Z, wherein Z is a mixture comprising Z2 and Z3 at a temperature in the range of 180 to 220 °C to obtain an intermediate (Q), wherein the amount of Z2 is in the range of 10 to 90 wt%, and the amount of Z3 is 10 to 90 wt%, both based on the total weight of the mixture;
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z2 and Z3 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

In a more preferred embodiment, the method for preparing the polymer P comprises at least the steps of,
(i) co-condensing at least one N-(hydroxyalkyl)amine (I) with Z, wherein Z is a mixture comprising Z1, Z2 and Z3 at a temperature in the range of 180 to 220 °C to obtain an intermediate (Q), wherein the amount of Z1 is in the range of 10 to 50 wt%, the amount of Z2 is 10 to 50 wt%, and the amount of Z3 is 10 to 50 wt%, all amounts based on the total weight of the mixture;
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;

wherein Z, Z1, Z2 and Z3 are as defined above,
wherein the weight ratio of the total amount of the at least one N-(hydroxyalkyl)amine of formula (I) employed in step (i) to the total amount of the at least one glycidyl ether of formula (II) employed in step (ii) is in the range from 1:10 to 10:1.

### Condensation reaction

The step (i) involves polycondensation reaction. The term "condensation" as used herein refers to a reaction in which two functional groups form one covalent bond with elimination of a small molecule, especially water. Molecules of the at least one N-(hydroxyalkyl)amine (I) can undergo condensation with each other through the hydroxy groups resulting in the formation of ether linkage. Each molecule of N-tri(hydroxyalkyl)amine (I) can form three ether linkages and similarly each molecule of N-di(hydroxyalkyl)amine (I) is capable of forming two ether linkages. Further, two hydroxyalkyl chains attached to a nitrogen atom can undergo intramolecular condensation with each other to form a morpholine moiety.

Molecules of the at least one N-(hydroxyalkyl)amine (I) can undergo condensation with the diol Z through the hydroxy groups and result in formation of ether bonds. Similarly, molecules of the at least one N-(hydroxyalkyl)amine (I) can undergo addition with diols, polyalkylene oxides and polyols and result in the formation of ether bonds.

In general, the water formed during condensation is removed from the reaction using techniques familiar to a skilled person, such as distilling off the water of the reaction, preferably under reduced pressure.

In a preferred embodiment, the self-condensation is carried out at a temperature in the range of 160 to 240°C, and preferably 180 to 220°C. In a preferred embodiment, the self-condensation is carried out over a period of 1 to 24 hours, and preferably of 4 to 12 hours.

In a preferred embodiment, the co-condensation is carried out at a temperature in the range of 160 to 240°C and preferably 180 to 220°C. In a preferred embodiment, the co-condensation is carried out over a period of 1 to 24 hours and preferably of 4 to 12 hours.

In a preferred embodiment, the weight ratio of the amount of at least one N-(hydroxyalkyl)amine of formula (I) and the amount of Z1 is in the range of 4:1 to 10:1, and more preferably 1:1 to 10:1.

In a preferred embodiment, the weight ratio of the amount of at least one N-(hydroxyalkyl)amine of formula (I) and the amount of Z2 is in the range of 4:1 to 10:1, and more preferably 1:1 to 10:1.

In a preferred embodiment, the weight ratio of the amount of at least one N-(hydroxyalkyl)amine of formula (I) and the amount of Z3 is in the range of 4:1 to 10:1, and more preferably 1:1 to 10:1.

In a preferred embodiment, the weight ratio of the amount of at least one N-(hydroxyalkyl)amine of formula (I) and the amount of Z is in the range of 4:1 to 10:1, and more preferably 1:1 to 10:1, wherein Z is a mixture of two or more compounds selected from Z1, Z2 and Z3.

Advantageously, the degree of condensation is controlled by varying the temperature and the time of reaction.

In a preferred embodiment, the step (i) further comprises adding at least one catalyst in an amount in the range of 0.01 to 5 wt% based on the amount of the at least one N-(hydroxyalkyl)amine of formula (I); more preferably in the range of 0.05 to 4 wt%; most preferably in the range of 0.1 to 3 wt%; and even more preferably in the range of 0.2 to 2.0 wt%.

In a preferred embodiment, the at least one catalyst is an acid selected from phosphoric acid (H₃PO₃) and hypophosphorous acid (H₃PO₂), hypophosphoric acid, sulfuric acid, triflic acid and toluene sulfonic acid.

In a preferred embodiment, the at least one catalyst is a mixture of phosphoric acid and hypophosphorous acid.

In a preferred embodiment, the intermediate (Q) has
a. a viscosity in the range of 2000 to 110000 mPas, determined according to ASTM-D7042 at 23 °C; and
b. a weight average molecular weight (M_{w}) in the range of 2000 to 80000 g/mol, the number average molecular weight (Mₙ) in the range of 1000 to 25000 g/mol, and the polydispersity index (PDI) in the range of from 1.0 to 3.0, each determined by gel permeation chromatography (HFIP).

In a preferred embodiment, the intermediate (Q) obtained by self-condensation of triethanolamine has a viscosity in the range of 1000 to 50000 mPas; more preferably in the range of 1500 to 25000; and most preferably in the range of 2000 to 10000 mPas, determined according to ASTM-D7042 at 23 °C.

In a preferred embodiment, the intermediate (Q) obtained by self-condensation of triethanolamine has a hydroxy number in the range of 400 to 1000 mgKOH/g; and more preferably in the range of 550 to 900 mgKOH/g, determined according to DIN 53240, part 2.

In a preferred embodiment, the intermediate (Q) obtained by self-condensation of triethanolamine has a weight average molecular weight (M_{w}) in the range of 2000 to 80000 g/mol, number average molecular weight (Mₙ) in the range of 1000 to 25000 g/mol and the polydispersity index (PDI) in the range of 1.0 to 3.0, each determined by gel permeation chromatography (HFIP).

In a preferred embodiment, the intermediate (Q) obtained by self-condensation of triisopropanolamine has a viscosity in the range of 10000 to 110000 mPas; and more preferably in the range of 15000 to 110000, determined according to ASTM-D7042 at 23 °C.

In a preferred embodiment, the intermediate (Q) obtained by self-condensation of triisopropanolamine has a hydroxy number in the range of 200 to 2000 mg KOH/g; more preferably in the range of 250 to 1500 mg KOH/g; and most preferably 300 to 1000 mg KOH/g, determined according to DIN 53240, part 2.

In a preferred embodiment, the intermediate (Q) obtained by self-condensation of triisopropanolamine has a weight average molecular weight (M_{w}) in the range of 2000 to 80000 g/mol, number average molecular weight (Mₙ) in the range of 1000 to 25000 g/mol and a polydispersity index (PDI) in the range of 1.0 to 3.0, each determined by gel permeation chromatography (HFIP).

### Alkoxylation

In a preferred embodiment, the step (ii) further comprises adding at least one catalyst in an amount in the range of 0.01 to 2.0 wt%, based on the total weight of the intermediate Q and the glycidyl ether (II); more preferably in the range of 0.05 to 1.5 wt%; and most preferably in the range of 0.1 to 1.0 wt%.

In a preferred embodiment, the at least one catalyst is selected from
(i) a Lewis acid selected from boron trifluoride, titanium tetrachloride, tin chloride, zirconium tetrachloride and complexes thereof; and
(ii) a quaternary phosphonium salt of formula R₁₂R₁₃R₁₄R₁₅P⁺X⁻, wherein R₁₂, R₁₃, R₁₄ and R₁₅ are independently selected from linear or branched, substituted or unsubstituted C₁-C₁₀ alkyl, substituted or unsubstituted C₆-C₁₈ aryl group and linear or branched, substituted or unsubstituted C₇-C₁₈ aralkyl, and X is a halide.

In a preferred embodiment, R₁₂, R₁₃, R₁₄ and R₁₅ are independently selected from methyl, ethyl, propyl, butyl, pentyl, hexyl, heptyl, octyl, nonyl, decyl, cyclohexyl and benzyl. X is a halide selected from chloride, bromide and iodide.

In a preferred embodiment, the at least one catalyst is selected from boron trifluoride benzylamine complex and ethyltriphenylphosphonium bromide.

The degree of alkoxylation of the polymer resulting from step iii) of the method of the presently claimed invention depends on the amount of the at least one glycidyl ether used, as well as on the reaction conditions, such as the reaction temperature.

In a preferred embodiment, step (iii) is carried out at a temperature in the range of 130 to 190 °C and more preferably 150 to 190 ⁰C.

In a preferred embodiment, step (iii) is carried out over a period of from 1 to 16 hours and preferably from 2 to 8 hours.

In a preferred embodiment, step (iii) is carried out till the solid content of the reaction mixture is >95 wt%, as determined in accordance with halogen dryer HR73 at 150°C.

### Defoamer compositions

Another aspect of the presently claimed invention is directed to a use of the polymer P of the presently claimed invention as a defoamer.

In a preferred embodiment, the polymer P of the presently claimed invention is useful as a component of defoamer compositions.

Yet another aspect of the presently claimed invention is directed to a defoamer composition comprising the polymer P of the presently claimed invention.

In a preferred embodiment, the defoamer composition comprising the polymer P of the presently claimed invention are suitable for use as defoamers in aqueous systems.

In a preferred embodiment, the amount of the polymer P in the defoamer composition is in the range of 0.5 to 50 wt%, more preferably 1 to 20 wt%, even more preferably 3 to 15 wt%; and most preferably 4 to 7 wt%, based on total weight of the defoamer composition.

In a preferred embodiment, the defoamer composition further comprises at least one additive selected from silicone oil, mineral oil, an emulsification aid, silica particles and water.

In a preferred embodiment, the defoamer composition comprises water as a carrier.

The compositions comprising the polymer P of the presently claimed invention are useful to control foam generated by any type of aqueous system having a surface tension below that of water such as aqueous-based personal care products (e.g., shampoos, facial cleaners, liquid hand soaps, and the like), and polymer latexes and latex paints.

The defoamer compositions are useful in the aqueous system in several ways. For example, the compositions can be added to an aqueous system such as a latex or a latex paint in an amount effective to eliminate or decrease the foam generated as a result of some type of mechanical action such as mixing, pouring, applying to a surface such as by a brush or a roller, and/or shaking.

In a preferred embodiment, the defoamer compositions comprises a mixture of water and an oil base as a carrier.

In a preferred embodiment, the defoamer compositions comprises an oil base as a carrier. The composition can be added to an aqueous system as part of a multi-component defoamer composition. The multi-component defoamer composition comprises polymer P and a hydrophobic solid dispersed in the oil base. The hydrophobic solid is any solid that is insoluble in the carrier.

In a preferred embodiment, the oil base is at least one selected from mineral oil and silicon oil.

In a preferred embodiment, the mineral oil is at least one selected from a paraffin oil, naphthenic oils, tall oil fatty acids and ethoxylated tall oil fatty acids, fatty alcohols and ethoxylated fatty alcohols, liquid polypropylene oxide, liquid polyethylene oxide and liquid polyethylene oxidepropylene oxides).

In a preferred embodiment, the silicone oil is at least one selected from modified polydimethylsiloxanes, polysiloxanes and organosilicones.

### Wetting agent

Yet another aspect of the presently claimed invention is directed to a use of the polymer P of the presently claimed invention as a wetting agent.

Yet another aspect of the presently claimed invention is directed to a wetting composition comprising the polymer P of the presently claimed invention and water.

In a preferred embodiment, the amount of the polymer P in the wetting composition is in the range of 0.5 to 50 wt%, more preferably 1 to 20 wt%, even more preferably 3 to 15 wt%; and most preferably 4 to 7 wt%, based on total weight of the wetting composition.

The wetting composition may further comprise organic solvents miscible with water. Examples of such solvents include alcohols such as ethanol, n-propanol, iso-propanol or butyldiglycol.

In a preferred embodiment, the wetting composition further comprises at least one additive selected from a rheology modifier, a defoamer, pigment dispersant, a UV filter, a leveling agent, a slip agent, an antioxidant, a radical scavenger, a biocide and a coalescing agent.

The wetting composition are prepared by mixing water, the polymer P of the presently claimed invention and optionally further additives.

The water used may be fresh water but also sea water or formation water may be used, i.e. more or less saline water. It is one of the advantages of the wettability modifiers used for the process according to the invention that they show good results in saline water.

In a preferred embodiment, the wetting composition is provided as a concentrated aqueous solution which is to be used directly at the location of use.

### Coating composition

Yet another aspect of the presently claimed invention is directed to a use of the polymer P of the presently claimed invention in a coating composition.

Yet another aspect of the presently claimed invention is directed to a coating composition comprising the polymer P of the presently claimed invention.

In a preferred embodiment, the coating composition further comprises at least one additive selected from a pigment dispersant, a rheology modifier, a UV filter, a defoamer, a leveling agent, a slip agent, a substrate wetting agent, an antioxidant, a radical scavenger, a biocide and a coalescing agent.

Yet another aspect of the presently claimed invention is directed to an article coated with a coating composition of the presently claimed invention.

### Printing ink

Yet another aspect of the presently claimed invention is directed to a use of the polymer P of the presently claimed invention in a printing ink and/or a printing varnish.

Yet another aspect of the presently claimed invention is directed to a printing ink or a printing varnish comprising the polymer P of the presently claimed invention.

The printing ink is in principle any printing ink for mechanical printing processes, i.e., processes wherein the printing ink comes into contact with the printing stock via a printing form. Representative examples include printing inks for offset printing, letterpress printing, flexographic printing, gravure printing or screen printing. The term "printing ink" includes printing varnishes also. Representative examples of printing form include printing plates or round printing forms also known as sleeves. The printing varnish is similar to printing ink except that it lacks the colorant.

In a preferred embodiment, a printing ink comprises at least one solvent, at least one colorant, at least one binder and optionally, further additives.

In a preferred embodiment, a printing ink comprises water as solvent.

In a preferred embodiment, the at least one binder is polymer P of the presently claimed invention. The printing ink optionally comprises at least one binder other than polymer P.

Printing varnishes do not contain a colorant, but otherwise have the same constituents as the printing inks described above.

The printing inks and varnishes comprising polymer P are useful for printing substrates, also known as printing stocks, such as paper, cardboard, metal foils and polymeric films.

In a preferred embodiment, the printing inks or a printing varnishes comprising the polymer P of the presently claimed invention are used for printing a substrate selected from a metal foil and a polymeric film.

The printing inks or a printing varnishes comprising the polymer P of the presently claimed invention are useful for printing a wide variety of substrates.

In a preferred embodiment, the polymeric film is selected from films of polyethylene, polypropylene, poly(4-methyl-1-pentene) and polystyrene. The polyethylene film is selected from films of high-density polyethylene (HDPE), low density polyethylene (LDPE) and linear lowdensity polyethylene (LLDPE). In a preferred embodiment, the polymeric film is selected from films of copolymers selected from ethylene-vinyl acetate copolymers, ethylene-acrylic acid copolymers and styrene-butadiene copolymers. Films of PVC or polycarbonates can also be used. In a preferred embodiment, the polymeric film is a film of polar materials and is selected from cellophane films, polyester films selected from polyethylene terephthalate, polybutylene terephthalate and polyethylene naphthalate, and polyamide films selected from films of PA 6, PA 12, PA 6/66, PA 6/12 and PA 11.

In a more preferred embodiment, the printing stocks comprises films of polyethylene, polypropylene, polystyrene, polyester and polyamide.

In a preferred embodiment, the printing stock comprises metal foils selected from aluminum foils, tin foils, titanium foils, copper foils and gold foils.

Yet another aspect of the presently claimed invention is directed to an article printed with a printing ink of the presently claimed invention.

The presently claimed invention offers one or more of the following advantages:
1) The polymers of the presently claimed invention find application over a wide range such as a wetting agent and a component of defoamer compositions.
2) Coating compositions comprising the polymer of the presently claimed invention are useful for coating a variety of substrates including polymer sheet and metal surfaces.
3) Defoamer compositions comprising the polymer of the presently claimed invention can be used to prevent foaming in coating compositions.

### Examples

The presently claimed invention is illustrated in detail by non-restrictive working examples which follow. More particularly, the test methods specified hereinafter are part of the general disclosure of the application and are not restricted to the specific working examples.

### Materials

C₃-C₁₈-alkylglycidyl ethers were available from Sigma-Aldrich Chemie GmbH and Fluka Chemie GmbH.

Bortrifluoride-benzylamine complex (CAS 696-99-1) was available from Apolda Laborchemie GmbH.

Trialkylphosphonium bromides and orthophosphoric acid were obtained from Merck.

Surfynol^{®} 104 E used as a comparative composition was available from Evonik GmBH.

Triethanolamine, Triisopronanolamine, 1,6-hexanediol and PEG 200 were available from BASF SE.
Luwipal^{®} 066 is a low viscosity, hexamethoxymethylmelamine resin;
Joncryl^{®} 8300 is a rheology controlled acrylic emulsion for thermoset water-based industrial metal, metallic and glass coatings;
Dispex^{®} Ultra PX 4575 is a water-based dispersant;
FoamStar^{®} SI 2250 is a silicon-based defoamer;
Rheovis^{®} HS 1332 is a hydrophobically modified alkali swellable emulsion (HASE);
Foamaster^{®} MO NDW is mineral-oil-based defoamer;
Acronal^{®} Pro 770 is an acrylic emulsion polymer;
Rheovis^{®} PU 1191 is an associative polyurethane thickener;
Hydropalat^{®} WE 3323 is a non-ionic, 100% active wetting agent and
Lutensol^{®} XL 50 is a nonionic surfactant
available from BASF SE.
AMP-90^{™} is 2-Amino-2-methyl-1- propanol available from Angus Chemical Company.
KRONOS^{®} 2190 is titanium dioxide is available from Kronos SE.
Halox^{®} 515 is a liquid organic corrosion inhibitor for high gloss (direct to metal) coating systems available from ICL Industrial SE.

### Methods

### 1) Determination of solid content

The solid content of the reaction mass was measured by a Mettler-Toledo halogen dryer HR73, at 150 °C by placing a 0.5 g sample on the sample holder and heating the equipment until a constant weight was obtained in sensitivity level 3 (medium).

### 2) Determination of the critical aggregation concentration (CAC)

The critical aggregation concentration was determined using a "soap titration equipment" with a Du Nouy ring measurement.

5% solutions of the respective material were prepared, and the CAC was measured.

The CAC value of the wetting agent is the coordinate on the x-axis (concentration, in log 10) where the slope of the curve of the static surface tension changes.

### 3) Measurement of the dynamic surface tension

Bubble lifetimes were measured from 0.03 s to 10 s. Solutions or oil in water emulsions containing 0.25 and 0.50 wt% of a wetting agent in demineralized water were prepared. The dynamic surface tension was measured with the help of a bubble tensiometer (SITA) at bubble lifetimes between 0.03 s and 10 s in a water/butylglycol mixture (19/1). The surface tension of the mixture at a bubble lifetime of 100 ms is 35 mN/m.

The resulting dynamic surface tension was plotted on a graph. The dynamic surface tension of the wetting agent is the value at a lifetime of 100 ms.

### A1) Condensation of N-(hydroxyalkyl)amine

Polymerized N-(hydroxyalkyl)amine, polytriethanolamine (pTEOA) and polytriisopropanolamine (pTIPA) were prepared by a process analogous to the process according to WO 2009/047269 Example A to the indicated OH value in Table 1. In the process of the presently claimed invention, the condensation reaction was carried out at 200 ° C. Further, the distillation step was optionally employed.

Polytriethanolamine type:
V: OH number = 880 - 885 mgKOH/g, viscosity at 23 °C = 2330 mPas
W: OH number = 690 - 695 mgKOH/g, viscosity at 23 °C = 3657 mPas
X: OH number = 630 - 635 mgKOH/g, viscosity at 23 °C = 4565 mPas
Y: OH number = 615 - 620 mgKOH/g, viscosity at 23 °C = 5450 mPas; GPC (HFIP) Mn 4540 and Mw 8460 g/mol)
Z: OH number = 565 - 570 mgKOH/g, viscosity at 23 °C = 5600 mPas

Polytriisopropylamine type
M: OH number = 700 - 710 mgKOH/g, viscosity at 23 °C = 25200 mPas, GPC (HFIP) Mn 3780 and Mw 4840 g/mol)
N: OH number = 490 - 500 mgKOH/g, viscosity at 23 °C = 102000 mPas; GPC (HFIP) Mn 2550 and Mw 6180 g/mol)

### A2) Co-condensation of N-(hydroxyalkyl)amine and another monomer

In a reactor equipped with an overhead stirrer, nitrogen inlet and dean-stark condenser, the amount of the N-(hydroxyalkyl)amine and the diol (polymer R or S), as indicated in the molar ratios for below examples were added into the reactor, followed by 3.2 mol % (with respect to total sum of monomers) of 50% (aqueous) ortho-phosphoric acid. The mixture was heated slowly to 200 °C while stirring and separating the formed reaction water, until the targeted OH number was reached after several hours. After cooling to RT, the material was used without further purification.
**R:** OH number 355-365 mgKOH/g, triethanolamine (3.0 moles), 1,6-hexanediol (1.5 moles), viscosity at 23 °C = 13800 mPas
**S:** OH number 290-300 mgKOH/g, triethanolamine (7.0 moles), polyethyleneglycol 200 (3.0 moles), viscosity at 23 °C = 7067 mPas, GPC (HFIP) Mn 3000 and Mw 39770 g/mol)

### B) Preparation of the polymers P

### General procedure G1

### Preparation of alkylated polymeric N-(hydroxyalkyl)amine ethers by thermal conditions

In a reactor equipped with an overhead stirrer, nitrogen inlet, addition funnel and cooler, polymerized N-(hydroxyalkyl)amine indicated in table 1, was added at RT, and the reactor was inertized. Heating was started, when the internal temperature of the reaction mixture reached 150 °C, the glycidylether as indicated in the table 1 was added in several portions (aliquots), each portion being 10-20 wt% of the total addition mass, over a period of 2 to 4 hours. Upon addition of an aliquot, the temperature of the reaction mixture increased due to an exothermic reaction, and the reaction mixture became turbid. The addition was carried out at such a manner that the reaction mass turned clear and the reaction mixture had cooled back to 150 °C before addition of the next aliquot. After the addition was completed, the reaction mass was stirred at 170 to 180 °C for at least 3 h until the solid content had reached a value of > 98% (measured by halogen dryer HR73, 150 °C). After cooling down, the products were obtained as yellowish viscous liquids. As a control method, ¹H NMR showed full conversion of the epoxide groups.

### General procedure G2

### Preparation of alkylmodified polyetheramines using a catalyst

In a reactor equipped with an overhead stirrer, nitrogen inlet, addition funnel and cooler, polymerized N-(hydroxyalkyl)amine indicated in table 1, was added at RT, and the reactor was inertized. 0.5 wt% of a catalyst (bortrifluoride-benzylamine, ethyltriphenylphosphoniumbromide, tributylhexadecylphosphonium bromide or ethoxycarbonylmethyl(triphenyl)phosphonium bromide) was added to the N-(hydroxyalkyl)amine in the reactor, and the content was heated to 120 °C internal temperature.

When the internal temperature of the reaction mixture reached 120 °C, the glycidylether as indicated in the table 1 was added in several portions (aliquots), each portion being 10-20 wt% , over a period of 2 to 4 hours. Upon addition of an aliquot, the temperature of the reaction mixture increased due to an exothermic reaction, and the reaction mixture became turbid. The addition was carried out at such a manner that the reaction mass turned clear and the reaction mixture had cooled back to 120 - 130 °C before addition of the next aliquot. After the addition was completed, the reaction mass was stirred at 150 °C for at least 3 h until the solid content had reached a value of > 98% (measured by halogen dryer HR73, 150 °C). After cooling down, the products were obtained as yellowish viscous liquids. As a control method, ¹H NMR showed full conversion of the epoxide groups.

### Example 1-4, 6 and 9-13: Preparation of Polymers P1-P4, P6 and P9-P13

Polymers P1-P4, P6 and P9-P13 were prepared using the procedure G1. The glycidyl ether used, and the amounts of poly-triethanolamine W or X used for the preparation of polymers P1-P4, P6 and P9-P13 are provided in Table 1.

### Example 5, 7 and 8: Preparation of Polymers P5, P7 and P8

Polymers P5, P7 and P8 were prepared using the procedure G2. The glycidyl ether D, and the amounts of poly-triethanolamine W used for the preparation of polymers P5, P7 and P8 are provided in Table 1.

### Example 14-17: Preparation of Polymers P14-P17

Polymers P14-P17 were prepared using the procedure G1. The glycidyl ether D, and the amounts of poly-triisopropanolamine M or N used for the preparation of polymers P14-P17 are provided in Table 1.

### Example 18-21: Preparation of Polymers P18-21

Polymers P18-21 were prepared using the procedure G1. The glycidyl ether D, and the amounts of poly-trialkanolamine-co-diol R or S used for the preparation of polymers P18-P21 are provided in Table 1.

**Table 1: Preparation of polymers P1-P21**

| Example-Polymer No | Procedure | Polyalkanolamine type | Weight of polyalkanolamine (g) | Glycidyl ether type* | Weight of glycidyl ether (g) |
|---|---|---|---|---|---|
| P1 | G1 | W | 50.0 | C | 50.0 |
| P2 | G1 | W | 40.0 | C | 60.0 |
| P3 | G1 | W | 50.0 | A | 50.0 |
| P4 | G1 | W | 50.0 | D | 50.0 |
| P5 | G2 | W | 30.0 | D | 70.0 |
| P6 | G1 | W | 20.0 | D | 80.0 |
| P7 | G2 | W | 25.0 | D | 75.0 |
| P8 | G2 | W | 65.0 | D | 35.0 |
| P9 | G1 | W | 25.0 | B and D | 30.0 and 45.0 |
| P10 | G1 | W | 25.0 | A | 75.0 |
| P11 | G1 | W | 25.0 | E | 75.0 |
| P12 | G1 | W | 30.0 | E | 70.0 |
| P13 | G1 | X | 50.0 | A | 50.0 |
| P14 | G1 | M | 25.0 | D | 75.0 |
| P15 | G1 | M | 40.0 | D | 60.0 |
| P16 | G1 | N | 25.0 | D | 75.0 |
| P17 | G1 | N | 40.0 | D | 60.0 |
| P18 | G2 | R | 35.0 | D | 65.0 |
| P19 | G2 | R | 25.0 | D | 75.0 |
| P20 | G2 | S | 25.0 | D | 75.0 |
| P21 | G2 | S | 40.0 | D | 65.0 |

| | | | | | |
|---|---|---|---|---|---|
| *Glycidyl ether type: **A:** C₁₆ alkyl glycidylether CAS 15965-99-8 **B:** 2-Ethylhexylglycidylether CAS 2461-15-6 **C:** C₈₋₁₀ alkyl glycidylether CAS 68609-96-1 **D:** C₁₂₋₁₄ alkyl glycidylether CAS 68609-97-2 **E:** C₁₃₋₁₅ alkyl glycidylether CAS 146982-96-4 | | | | | |

### C) Comparative examples: Preparation of the polymers C1-C3 with C₃ and C₄ alkyl glycidyl ether

For comparison, polymers C1-C3 were prepared using the procedure G2. The glycidyl ether F and G, and the amounts of poly-triethanolamines W and V used for the preparation of polymers C1-C3 are provided in Table 2.

**Table 2: Preparation of polymers C1-C3**

| Comparative Examples (Polymer No) | Procedure | Polyalkanolamine type | Weight of polyalkanolamine (g) | Glycidyl ether type** | Weight of glycidyl ether (g) |
|---|---|---|---|---|---|
| C1 | G2 | W | 43.0 | F | 57.0 |
| C2 | G2 | W | 43.0 | G | 57.0 |
| C3 | G2 | V | 35.0 | G | 65.0 |

| | | | | | |
|---|---|---|---|---|---|
| **Glycidyl ether type: **F:** allyl glycidylether CAS 106-92-3 **G:** butyl glycidylether CAS 2426-08-6 | | | | | |

### B) Performance testing:

The physical properties of the polymers of the presently claimed invention such as critical aggregation concentration and dynamic surface tension were determined. The results are shown in Table 4.

The performance of the polymers of the presently claimed invention as wetting agents was evaluated by direct-to-metal wetting. The results are shown in Tables 4 and 5.

Further, the foaming behavior of the polymers of the presently claimed invention was evaluated and the results are shown in Tables 4 and 6.

The wetting properties and foam behavior of the polymers of the presently claimed invention were compared with the following benchmark/reference products.
- Surfynol^{®} 104 E
- Hydropalat WE 3323
- Lutensol XL 50

### 1. Wetting direct-to-metal

Steel panel surfaces were cleaned with ethyl acetate and dried. The dried surface was coated with anti-corrosive coating Lusin^{®} Protect G13F by spray application followed by even wiping with a cotton cloth.

A series of water-based melamine coating compositions (Table 3) or waterborne acrylic coating composition (Table 4) comprising the polymers P1-P17 of the presently claimed invention as wetting agents were prepared. The components of the coating compositions are provided in Table 3 and 4. The coating compositions were prepared by mixing the components in a speed mixer at 2750 rpm for 2 min.

For comparison, similar coating compositions were prepared by replacing polymer P with the comparative wetting agents.

Each coating composition was applied to a steel panel surface as a coat of 80 µm thickness at 20mm/s with a bar coater and the coated surface was dried overnight in air. The next day, the coated surface was cured at 80 °C in an oven for 30 min.

The surface coverage is calculated after taking a picture and generating a black/white image.

**Table 3: Waterborne melamine system**

| No. | Material | Function | Weight % |
|---|---|---|---|
| 1 | Water | Carrier | 19.65 |
| 2 | Butylglycol | Glycol Solvent | 5.00 |
| 3 | Luwipal^{®}066 | Melamine Resin Crosslinker | 10.80 |
| 4 | Joncryl^{®} 8300 | Waterborne Acrylic Dispersion (OH Value: 100) | 58.20 |
| 5 | AMP 90^{™} | pH adjustment | 0.75 |
| 6 | Dispex^{®} Ultra PX 4575 | Dispersant | 1.30 |
| 7 | FoamStar^{®} SI 2250 | Defoamer | 0.20 |
| 8 | FoamStar^{®} SI 2210 | Defoamer | 0.10 |
| 9 | Wetting agent | Polymer P | 1.00 |
| 10 | Rheovis^{®} HS 1332 | Rheology agent | 3.00 |
| | Total | | 100.00 |

**Table 4: Waterborne dispersion**

| No | Raw material | Function | Amount [g] |
|---|---|---|---|
| 1 | Water | Carrier | 8.5 |
| 2 | Dispex^{®} Ultra PX 4575 | Dispersant | 2.2 |
| 3 | Foamaster^{®} MO NDW | Defoamer | 0.3 |
| 4 | DMEA (50% in Water) | pH adjustment | 0.1 |
| 5 | Kronos^{®} 2190 | Pigment | 19.4 |
| 6 | Acronal^{®} Pro 770 | Waterborne Acrylic Dispersion | 56.4 |
| 7 | Water | Carrier | 3.3 |
| 8 | Butylglykol | Glycol solvent | 6.5 |
| 9 | FoamStar^{®} SI 2210 | Defoamer | 0.2 |
| 10 | Halox^{®} 515 | Corrosion inhibitor | 2.2 |
| 11 | DMEA (50% in Water) | pH adjustment | 0.2 |
| 12 | Rheovis^{®} PU 1191 | Thickener | 0.2 |
| 13 | Polymer P | Wetting agent | 0.5 |

### 2. Foam behaviour

Foam promotion was tested by putting 5 wt.% of the polymer P into water and shake it thoroughly. Foam is rated from 1 (good, no foam) to 5 (bad, persistent foam).

The results are summarized in Table 5, 6 and 7.

**Table 5: Application data**

| Material | DST 0.5% | CMC [mg/L] | Wetting DTM Joncryl 8300 | Foam 5% in H₂O |
|---|---|---|---|---|
| Blank | 35 | n.d. | 70 | 1.0 |
| Surfynol^{®} 104 E | 28 | n.d. | 95 | 1.0 |
| Hydropalat WE 3323 | 28 | 30 | 91 | 2.0 |
| Lutensol XL 50 | 26 | 264 | 91 | 5.0 |
| P1 | 28 | n.d. | 98 | 3.0 |
| P2 | n.d. | n.d. | n.d. | 2.0 |
| P3 | 38 | n.d. | n.d. | n.d. |
| P4 | 32 | n.d. | 96 | 3.0 |
| P5 | 33 | n.d. | 92 | 2.0 |
| P6 | 34 | n.d. | 41 | 1.0 |
| P7 | 31 | 22 | 90 | 1.0 |
| P8 | 29 | n.d. | 90 | 4.0 |
| P13 | n.d. | n.d. | n.d. | n.d. |

**Table 6: Application data**

| Material | Wetting DTM Acronal Pro 770 |
|---|---|
| Blank | 11 |
| Surfynol^{®} 104 E | 17 |
| Hydropalat WE 3323 | 30 |
| P5 | 45 |
| P6 | 61 |
| P7 | 49 |

**Table 7: Application data**

| Material | Wetting DTM Joncryl 8300 0.5% | Foam 5% in H₂O |
|---|---|---|
| Blank | 19% | 1.0 |
| P14 | 35% | 1.0 |
| P15 | 41% | 1.0 |
| P16 | 33% | 1.0 |
| P17 | 26% | 1.0 |
| Surfynol 104E | n.d. | 1.0 |

### Application data of control polymers

The wetting properties and foam behavior of the comparative polymers C1-C3 was analyzed.

Wetting properties: The wetting properties were determined using the composition and procedure similar to the wetting direct-to-metal (waterborne melamine system (Table 3)).

Foam behavior: 0.5 wt.% of the comparative polymer was added into 150 g of the formulation of Table 3 in a 370 ml glass jar and dispersed with a Dispermat^{®} using a 4 cm plate at 5000 rpm for 3 min. The density of the resultant formulation was measured using a pycnometer.

The results are summarized in table 8.

**Table 8: Control experiments application data**

| Material | Wetting DTM Surface coverage | Density (g/cm³) |
|---|---|---|
| Blank | 20 | 0.6730 |
| C1 | 30 | 0.7641 |
| C2 | 22 | 0.7693 |
| C3 | 27 | 0.7524 |

## Claims

1. A polymer P obtainable by
(a) self-condensing at least one N-(hydroxyalkyl)amine of formula (I), 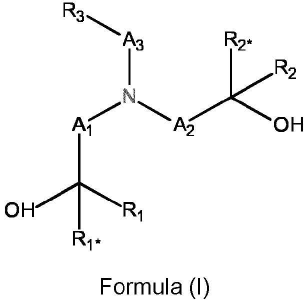 wherein,
A₁, A₂ and A₃ are identical or different and are selected from unsubstituted, linear or branched C₁-C₄ alkylene,
R₁, R_{1*}, R₂, and R_{2*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
R₃ is selected from H, linear or branched, substituted or unsubstituted C₁-C₄ alkyl, substituted or unsubstituted C₃-C₆ cycloalkyl, substituted or unsubstituted C₆-C₁₈ aryl, linear or branched, substituted or unsubstituted C₇-C₁₈ aralkyl, and 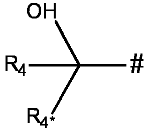 wherein R₄ and R_{4*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl, and # indicates point of attachment to A₃, to obtain an intermediate (Q);
or co-condensing at least one N-(hydroxyalkyl)amine of formula (I) with Z, wherein Z is at least one compound selected from Z1, Z2 and Z3,
wherein
Z1 is at least one diol of formula
HO-Rs-OH;
wherein R₈ is selected from a linear or branched, substituted or unsubstituted C₂-C₁₈ alkylene and substituted or unsubstituted C₃-C₆ cycloalkylene, and R₈ is optionally substituted with at least one linear or branched C₁-C₃ alkyl, and R₈ is optionally interrupted by oxygen atoms,
Z2 is a polyalkyleneoxide selected from polyethyleneoxide, polypropyleneoxide, polytetramethylenether glycol and copolymers thereof, and having a weight average molecular weight (M_{w}) from 100 to 1500 g/mol, and
Z3 is a polyol of formula
R₁₁(OH)ₘ,
wherein m is an integer selected from 3 to 6, and
R₁₁ is a m-valent linear or branched, substituted or unsubstituted C₃-C₁₀ alkyl, substituted or unsubstituted C₄-C₁₀ cycloalkyl, and linear or branched, substituted or unsubstituted C₇-C₁₀ aralkyl;
to obtain an intermediate (Q); and
(b) reacting the intermediate (Q) obtained in step (a) with at least one glycidyl ether of the formula (II), 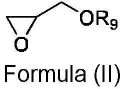 wherein
R₉ is a linear or branched, substituted or unsubstituted C₆-C₂₀ alkyl;
wherein, in step (b) the ratio of moles of hydroxy-groups of intermediate (Q) calculated on the basis of its hydroxyl number to moles of the at least one glycidyl ether of the formula (II) is in the range from 0.03:1 to 1:3; and
wherein the amount of the at least one N-(hydroxyalkyl)amine of the formula (I) is in the range of 10 to 90 wt% and the amount of the at least one glycidyl ether of the formula (II) is in the range of 10 to 90 wt%, each based on the total weight of the polymer P.

2. The polymer P according to claim 1, wherein the at least one N-(hydroxyalkyl)amine of the formula (I) is a mixture comprising N-(hydroxyalkyl)amines of formulae (Ia) and/or (Ib), 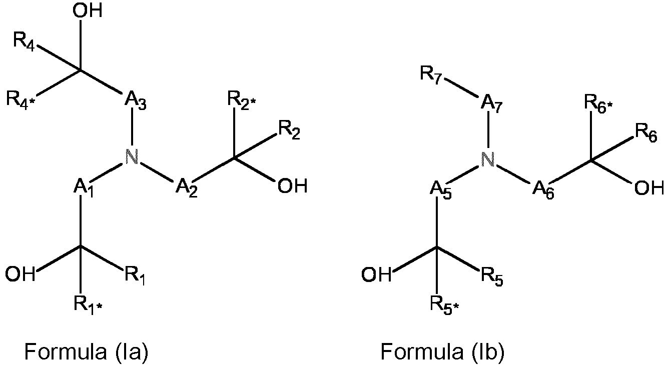 wherein
A₅, A₆ and A₇ are identical or different and are selected from unsubstituted C₁-C₄ alkylene,
R₅, R_{5*}, R₆ and R_{6*} are identical or different and are selected from H, linear or branched, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
R₇ is selected from hydrogen, substituted or unsubstituted C₁-C₄ alkyl, substituted or unsubstituted C₃-C₆ cycloalkyl, substituted or unsubstituted C₆-C₁₈ aryl, and linear or branched, substituted or unsubstituted C₇-C₁₈ aralkyl,
wherein the amount of the N-(hydroxyalkyl)amine of formula (Ia) is in the range of 70 to 100 wt% and the amount of the N-(hydroxyalkyl)amine of formula (Ib) is in the range of 0 to 30 wt%, each based on the total weight of N-(hydroxyalkyl)amine of formula (I).

3. The polymer P according to claim 1 or 2, wherein A₁, A₂ and A₃ are identical or different and are selected from the group consisting of methylene, ethylene, n-propylene and isopropylene,
wherein A₁, A₂ and A₃ are preferably methylene;
and/or
wherein R₁, R_{1*}, R₂, and R_{2*} are identical or different and are selected from H and methyl;
wherein preferably R₁, R_{1*}, R₂, and R_{2*} are H;
or
wherein preferably R₁ and R₂ are methyl, and R_{1*} and R_{2*} are hydrogen.

4. The polymer P according to any of claims 1 to 3, wherein R₃ is 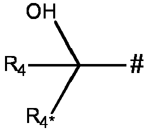 wherein R₄ and R_{4*} are identical or different and are selected from H and methyl; wherein preferably R₃ is -CH₂OH.

5. The polymer P according to any of claims 1 to 4, wherein R₉ is at least one selected from hexyl, heptyl, octyl, nonyl, decyl, undecyl, dodecyl, tridecyl, tetradecyl, pentadecyl, hexadecyl, octadecyl and mixtures thereof.

6. The polymer P according to any of claims 1 to 5, obtainable by reacting the intermediate (Q) obtained in step (a) with at least one glycidyl ether of the formula (II), 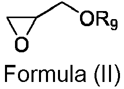
and at least one diglycidyl ether of formula (IIa) 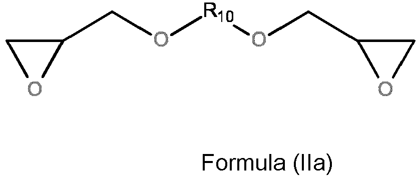 wherein, R₁₀ is a linear or branched, substituted or unsubstituted C₃-C₂₀ alkylene, substituted or unsubstituted C₃-C₆ cycloalkylene, and substituted or unsubstituted C₆-C₁₈ aryl; and
the amount of the at least one diglycidyl ether of formula (IIa) is in the range of 1 to 20 wt% with respect to the amount of the glycidyl ether of the formula (II); wherein
the polymer P , is preferably obtainable by
(a) self-condensing the at least one N-(hydroxyalkyl)amine of formula (I), 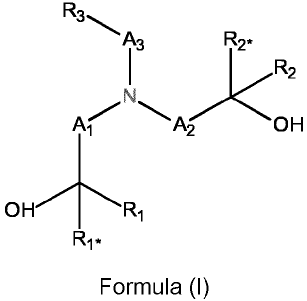 wherein
R₁, R_{1*}, R₂, and R_{2'*} are selected from H and methyl,
R₃ is selected from H, methyl, and 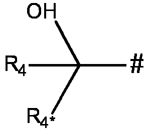
wherein R₄ and R_{4*} are identical or different and are selected from H and methyl; and
A₁, A₂ and A₃ are identical and are selected from methylene, ethylene, n-propylene and isopropylene, to obtain intermediate Q; and
(b) reacting the intermediate Q obtained in step (a) with the at least one glycidyl ether of formula (II), 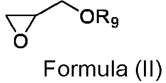 wherein
R₉ is selected from hexyl, heptyl, octyl, nonyl, decyl, undecyl, dodecyl, tridecyl, tetradecyl, pentadecyl, hexadecyl, octadecyl and mixtures thereof.

7. The polymer P according to any of claims 1 to 6, wherein the at least one N-(hydroxyalkyl)amine of formula (I) is triethanolamine; or wherein the at least one N-(hydroxyalkyl)amine of formula (I) is triisopropanolamine.

8. The polymer P according to any of the claims 1 to 6, obtainable by
(a) self-condensing triethanolamine to obtain intermediate Q having a degree of polymerization in the range of 3 to 300, calculated on the basis of its hydroxy number or the amount of water collected during the condensation, and
(b) reacting intermediate Q with a mixture of glycidyl ethers comprising glycidyl ethers of formula (IIp) and formula (Ilq) to obtain polymer P,

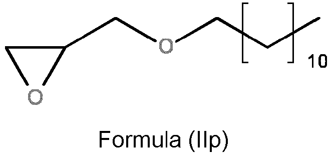

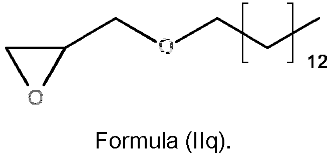

9. The polymer P according to any of claims 1 to 6, obtainable by
(a) self-condensing triethanolamine to obtain intermediate Q having a degree of polymerization in the range of 3 to 300, calculated on the basis of its hydroxy number or the amount of water collected during the condensation, and
(b) reacting intermediate Q with a mixture of glycidyl ethers comprising glycidyl ethers of formula (IIp), (IIq) and (IIr) to obtain polymer P,

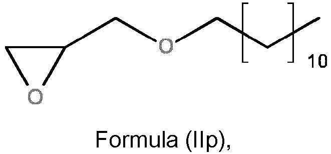

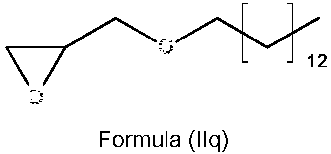

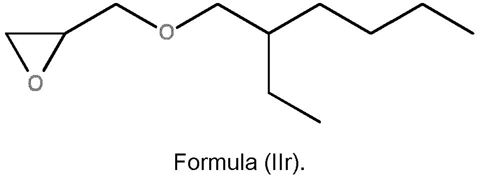

10. A method for preparing the polymer P according to any of claims 1 to 9, the method comprising at least the steps of,
(i) self-condensing the at least one N-(hydroxyalkyl)amine of formula (I) at a temperature in the range of 160 to 240 °C to obtain an intermediate (Q), or
co-condensing at least one N-(hydroxyalkyl)amine (I) with Z, wherein Z is at least one compound selected from Z1, Z2 and Z3 at a temperature in the range of 160 to 240 °C to obtain an intermediate (Q);
(ii) adding the at least one glycidyl ether (II) to the intermediate (Q) at a temperature in the range of 100 to 160 °C; and
(iii) heating the reaction mixture obtained in step (ii) at a temperature in the range of 130 to 190 °C to obtain the polymer;
wherein Z, Z1, Z2 and Z3 are as defined in claims 1 to 9,
wherein the weight ratio of the total amount of the at least one N-(hydroxyalkyl)amine of formula (I) employed in step (i) to the total amount of the at least one glycidyl ether of formula (II) employed in step (ii) is in the range of 1:10 to 10:1.

11. The method according to claim 10, wherein step (i) further comprises adding at least one catalyst in an amount in the range of 0.1 to 5 wt% based on the amount of the at least one N-(hydroxyalkyl)amine of formula (I);
wherein the at least one catalyst is preferably an acid selected from phosphoric acid, hypophosphoric acid, sulfuric acid, triflic acid and toluene sulfonic acid.

12. The method according to any of claims 10 or 11, wherein step (ii) further comprises adding at least one catalyst in an amount in the range of 0.1 to 2.0 wt%, based on the total weight of the intermediate Q and the glycidyl ether (II);
wherein the at least one catalyst is preferably selected from
(i) a Lewis acid selected from boron trifluoride, titanium tetrachloride, tin chloride, zirconium tetrachloride and complexes thereof; and
(ii) a quaternary phosphonium salt of formula R₁₂R₁₃R₁₄R₁₅P⁺X⁻, wherein R₁₂, R₁₃, R₁₄ and R₁₅ are independently selected from linear or branched, substituted or unsubstituted C₁-C₁₀ alkyl, substituted or unsubstituted C₆-C₁₈ aryl group and linear or branched, substituted or unsubstituted C₇-C₁₈ aralkyl, and X is a halide;
wherein more preferably, the at least one catalyst is selected from boron trifluoride benzylamine complex and ethyltriphenylphosphonium bromide.

13. The method according to any of claims 10 to 12, wherein the intermediate (Q) has
a. a viscosity in the range of 2000 to 110000 mPas, determined according to ASTM-D7042 at 23 °C; and
b. a weight average molecular weight (M_{w}) in the range of 2000 to 80000 g/mol, the number average molecular weight (Mₙ) in the range of 1000 to 25000 g/mol, and the polydispersity index (PDI) in the range of from 1.0 to 3.0, each determined by gel permeation chromatography (HFIP).

14. Use of the polymer P according to any of claims 1 to 9 as a wetting agent; or
in a coating composition; or
as a defoamer; or
in a defoamer composition.

15. A defoamer composition comprising the polymer P according to any of claims 1 to 9;
the defoamer composition preferably further comprising at least one additive selected from silicone oil, mineral oil, an emulsification aid, silica particles, wax and water.

16. A coating composition comprising the polymer P according to any of claims 1 to 9;
the coating composition preferably further comprising at least one additive selected from a pigment dispersant, a rheology modifier, a UV filter, a defoamer, a leveling agent, a slip agent, a substrate wetting agent, an antioxidant, a radical scavenger, a biocide and a coalescing agent.

17. An article coated with a coating composition according to claim 16.

## Patentansprüche

1. Polymer P, erhältlich durch
(a) Selbstkondensation mindestens eines N-(Hydroxyalkyl)amins der Formel (I), 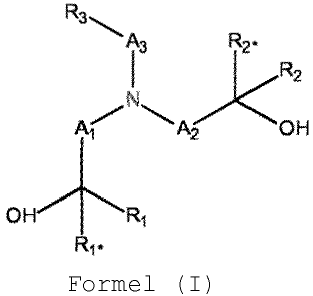 wobei
A₁, A₂ und A₃ gleich oder verschieden sind und aus unsubstituiertem, linearen oder verzweigtem C₁-C₄-Alkylen ausgewählt sind,
R₁, R_{1*}, R₂ und R_{2*} gleich oder verschieden sind und aus H, linearem oder verzweigtem, substituiertem oder unsubstituiertem C₁-C₄-Alkyl, substituiertem oder unsubstituiertem C₃-C₆-Cycloalkyl, substituiertem oder unsubstituiertem C₆-C₁₈-Aryl und linearem oder verzweigtem, substituiertem oder unsubstituiertem C₇-C₁₈-Aralkyl ausgewählt sind,
R₃ aus H, linearem oder verzweigtem, substituiertem oder unsubstituiertem C₁-C₄-Alkyl, substituiertem oder
unsubstituiertem C₃-C₆-Cycloalkyl, substituiertem oder unsubstituiertem C₆-C₁₈-Aryl, linearem oder verzweigtem, substituiertem oder unsubstituiertem C₇-C₁₈-Aralkyl und 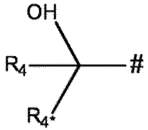 ausgewählt ist, wobei R₄ und R_{4*} gleich oder verschieden sind und aus H, linearem oder verzweigtem, substituiertem oder unsubstituiertem C₁-C₄-Alkyl, substituiertem oder unsubstituiertem C₃-C₆-Cycloalkyl, substituiertem oder unsubstituiertem C₆-C₁₈-Aryl und linearem oder verzweigtem, substituiertem oder unsubstituiertem C₇-C₁₈O-Aralkyl ausgewählt sind und # den Anbindungspunkt an A₃ anzeigt, zum Erhalt eines Zwischenprodukts (Q);
oder Cokondensation mindestens eines N-(Hydroxyalkyl)amins der Formel (I) mit Z, wobei Z mindestens eine aus Z1, Z2 und Z3 ausgewählte Verbindung ist,
wobei
Z1 mindestens ein Diol der Formel
HO-R₈-OH
ist; wobei R₈ aus linearem oder verzweigtem, substituiertem oder unsubstituiertem C₂-C₁₈-Alkylen und substituiertem oder unsubstituiertem C₃-C₆-Cycloalkylen ausgewählt ist und R₈ gegebenenfalls durch mindestens ein lineares oder verzweigtes C₁-C₃ -Alkyl substituiert ist und R₈ gegebenenfalls durch Sauerstoffatome unterbrochen ist,
Z2 ein Polyalkyleneoxid ist, das aus Polyethylenoxid, Polypropylenoxid, Polytetramethylenetherglykol und Copolymeren davon ausgewählt ist und ein gewichtsmittleres Molekulargewicht (M_{w}) von 100 bis 1500 g/mol aufweist, und
Z3 ein Polyol der Formel
R₁₁(OH)ₘ
ist, wobei m für eine ganze Zahl steht, die aus 3 bis 6 ausgewählt ist, und
R₁₁ für ein m-wertiges lineares oder verzweigtes, substituiertes oder unsubstituiertes C₃-C₁₀-Alkyl, substituiertes oder unsubstituiertes C₄-C₁₀-Cycloalkyl und lineares oder verzweigtes, substituiertes oder unsubstituiertes C₇-C₁₀-Aralkyl steht;
Zum Erhalt eines Zwischenprodukts (Q); und
(b) Umsetzen des in Schritt (a) erhaltenen Zwischenprodukts (Q) mit mindestens einem Glycidylether der Formel (II), 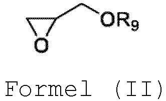 wobei
R₉ für ein lineares oder verzweigtes, substituiertes oder unsubstituiertes C₆-C₂₀-Alkyl steht;
wobei in Schritt (b) das Verhältnis von Molen von Hydroxygruppen von Zwischenprodukt (Q), berechnet auf der Basis seiner Hydroxylzahl, zu Molen des mindestens einen Glycidylethers der Formel (II) im Bereich von 0,03:1 bis 1:3 liegt; und
wobei die Menge des mindestens einen N-(Hydroxyalkyl)amins der Formel (I) im Bereich von 10 bis 90 Gew.-% liegt und die Menge des mindestens einen Glycidylethers der Formel (II) im Bereich von 10 bis 90 Gew.-% liegt, jeweils bezogen auf das Gesamtgewicht des Polymers P.

2. Polymer P nach Anspruch 1, wobei es sich bei dem mindestens einen N-(Hydroxyalkyl)amin der Formel (I) um ein Gemisch handelt, das N-(Hydroxyalkyl)amine der Formeln (Ia) und/oder (Ib) umfasst, 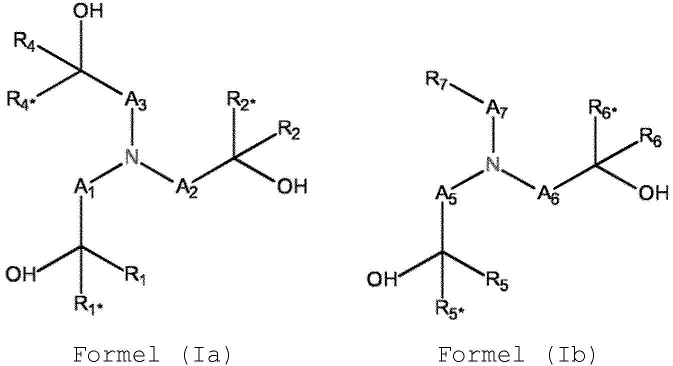 wobei
A₅, A₆ und A₇ gleich oder verschieden sind und aus unsubstituiertem C₁-C₄-Alkylen ausgewählt sind,
R₅, R_{5*}, R₆ und R_{6*} gleich oder verschieden sind und aus H, linearem oder verzweigtem, substituiertem oder unsubstituiertem C₁-C₄-Alkyl, substituiertem oder unsubstituiertem C₃-C₆-Cycloalkyl, substituiertem oder unsubstituiertem C₆-C₁₈-Aryl und linearem oder verzweigtem, substituiertem oder unsubstituiertem C₇-C₁₈-Aralkyl ausgewählt sind,
R₇ aus Wasserstoff, substituiertem oder unsubstituiertem C₁-C₄4-Alkyl, substituiertem oder unsubstituiertem C₃-C₆-Cycloalkyl, substituiertem oder unsubstituiertem C₆-C₁₈-Aryl und linearem oder verzweigtem, substituiertem oder unsubstituiertem C₇-C₁₈-Aralkyl ausgewählt ist,
wobei die Menge des N-(Hydroxyalkyl)amins der Formel (Ia) im Bereich von 70 bis 100 Gew.-% liegt und die Menge des N-(Hydroxyalkyl)amins der Formel (Ib) im Bereich von 0 bis 30 Gew.-% liegt, jeweils bezogen auf das Gesamtgewicht von N-(Hydroxyalkyl)amin der Formel (I).

3. Polymer P nach Anspruch 1 oder 2, wobei A₁, A₂ und A₃ gleich oder verschieden sind und aus der Gruppe bestehend aus Methylen, Ethylen, n-Propylen und Isopropylen ausgewählt sind,
wobei A₁, A₂ und A₃ vorzugsweise für Methylen stehen; und/oder
wobei R₁, R_{1*}, R₂ und R_{2*} gleich oder verschieden sind und aus H und Methyl ausgewählt sind;
wobei vorzugsweise R₁, R_{1*}, R₂ und R_{2*} für H stehen;
oder
wobei vorzugsweise R₁ und R₂ für Methyl stehen R_{1*} und R_{2*} für Wasserstoff stehen.

4. Polymer P nach einem der Ansprüche 1 bis 3, wobei R₃ für 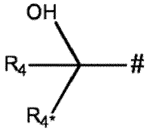 steht, wobei R₄ und R_{4*} gleich oder verschieden sind und aus H und Methyl ausgewählt sind; wobei vorzugsweise R₃ für -CH₂OH steht.

5. Polymer B nach einem der Ansprüche 1 bis 4, wobei R₉ für mindestens eines steht, das aus Hexyl, Heptyl, Octyl, Nonyl, Decyl, Undecyl, Dodecyl, Tridecyl, Tetradecyl, Pentadecyl, Hexadecyl, Octadecyl und Mischungen davon ausgewählt ist.

6. Polymer P nach einem der Ansprüche 1 bis 5, erhältlich durch Umsetzen des in Schritt (a) erhaltenen Zwischenprodukts (Q) mit mindestens einem Glycidylether der Formel (II), 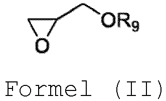
und mindestens einem Diglycidylether der Formel (IIa) 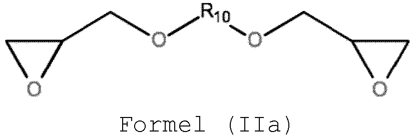
wobei R₁₀ für ein lineares oder verzweigtes, substituiertes oder unsubstituiertes C₃-C₂₀-Alkylen, substituiertes oder unsubstituiertes C₃-C₆-Cycloalkylen und substituiertes oder unsubstituiertes C₆-C₁₈-Aryl steht; und
die Menge des mindestens einen Diglycidylethers der Formel (IIa) im Bereich von 1 bis 20 Gew.-%, bezogen auf die Menge des Glycidylethers der Formel (II), liegt; wobei
das Polymer P vorzugsweise erhältlich ist durch (a) Selbstkondensation des mindestens einen N-(Hydroxyalkyl)amins der Formel (I), 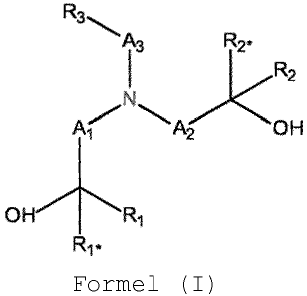 wobei
R₁, R_{1*}, R₂ und R_{2*} aus H und Methyl ausgewählt sind,
R₃ aus H, Methyl und 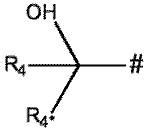
ausgewählt ist, wobei R₄ und R_{4*} gleich oder verschieden sind und aus H und Methyl ausgewählt sind; und
A₁, A₂ und A₃ gleich sind und aus Methylen, Ethylen, n-Propylen und Isopropylen ausgewählt sind, zum Erhalt von Zwischenprodukt Q; und
(b) Umsetzen des in Schritt (a) erhaltenen Zwischenprodukts Q mit mindestens einem Glycidylether der Formel (II), 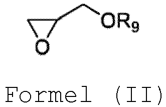 wobei
R₉ aus Hexyl, Heptyl, Octyl, Nonyl, Decyl, Undecyl, Dodecyl, Tridecyl, Tetradecyl, Pentadecyl, Hexadecyl, Octadecyl und Mischungen davon ausgewählt ist.

7. Polymer P nach einem der Ansprüche 1 bis 6, wobei es sich bei dem mindestens einen N-(Hydroxyalkyl)amin der Formel (I) um Triethanolamin handelt; oder wobei es sich bei dem mindestens einen N-(Hydroxyalkyl)amin der Formel (I) um Triisopropanolamin handelt.

8. Polymer P nach einem der Ansprüche 1 bis 6, erhältlich durch
(a) Selbstkondensation von Triethanolamin zum Erhalt von Zwischenprodukt Q mit einem Polymerisationsgrad im Bereich von 3 bis 300, berechnet auf der Basis seiner Hydroxylzahl oder der während der Kondensation gesammelten Wassermenge, und
(b) Umsetzen von Zwischenprodukt Q mit einem Gemisch von Glycidylethern, das Glycidylether der Formel (IIp) und Formel (IIq) umfasst, zum Erhalt von Polymer P,

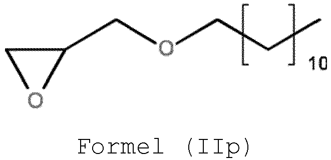

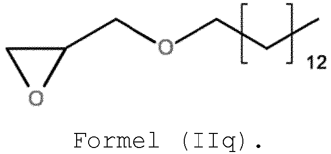

9. Polymer P nach einem der Ansprüche 1 bis 6, erhältlich durch
(a) Selbstkondensation von Triethanolamin zum Erhalt von Zwischenprodukt Q mit einem Polymerisationsgrad im Bereich von 3 bis 300, berechnet auf der Basis seiner Hydroxylzahl oder der während der Kondensation gesammelten Wassermenge, und
(b) Umsetzen von Zwischenprodukt Q mit einem Gemisch von Glycidylethern, das Glycidylether der Formel (IIp), (IIq) und (IIr) umfasst, zum Erhalt von Polymer P,

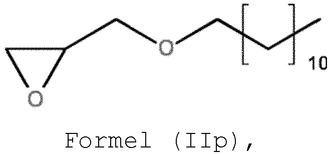

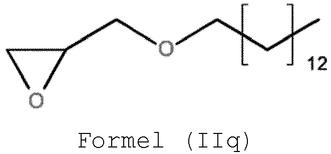

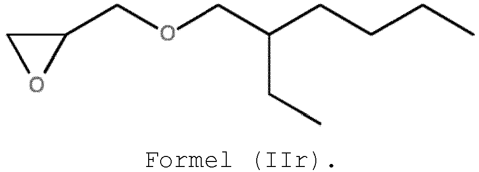

10. Verfahren zur Herstellung des Polymers P nach einem der Ansprüche 1 bis 9, wobei das Verfahren mindestens die folgenden Schritte umfasst:
(i) Selbstkondensation des mindestens einen N-(Hydroxyalkyl)amins der Formel (I) bei einer Temperatur im Bereich von 160 bis 240 °C zum Erhalt eines Zwischenprodukts (Q) oder
Cokondensation mindestens eines N-(Hydroxyalkyl)amins (I) mit Z, wobei Z mindestens eine aus Z1, Z2 und Z3 ausgewählte Verbindung ist, bei einer Temperatur im Bereich von 160 bis 240 °C zum Erhalt eines Zwischenprodukts (Q);
(ii) Zugeben des mindestens einen Glycidylethers (II) zu dem Zwischenprodukt (Q) bei einer Temperatur im Bereich von 100 bis 160 °C; und
(iii) Erhitzen der in Schritt (ii) erhaltenen Reaktionsmischung auf eine Temperatur im Bereich von 130 bis 190 °C zum Erhalt des Polymers;
wobei Z, Z1, Z2 und Z3 wie in den Ansprüchen 1 bis 9 definiert sind,
wobei das Gewichtsverhältnis der Gesamtmenge des in Schritt (i) eingesetzten mindestens einen N-(Hydroxyalkyl)amins der Formel (I) zur Gesamtmenge des mindestens einen in Schritt (ii) eingesetzten Glycidylethers der Formel (II) im Bereich von 1:10 bis 10:1 liegt.

11. Verfahren nach Anspruch 10, wobei Schritt (i) ferner das Zugeben von mindestens einem Katalysator in einer Menge im Bereich von 0,1 bis 5 Gew.-%, bezogen auf die Menge des mindestens einen N-(Hydroxyalkyl)amins der Formel (I), umfasst;
wobei es sich bei dem mindestens einen Katalysator vorzugsweise um eine aus Phosphorsäure, Hypophosphorsäure, Schwefelsäure, Trifluormethylsulfonsäure und Toluolsulfonsäure ausgewählte Säure handelt.

12. Verfahren nach Anspruch 10 oder 11, wobei Schritt (ii) ferner das Zugeben von mindestens einem Katalysator in einer Menge im Bereich von 0,1 bis 2,0 Gew.-%, bezogen auf das Gesamtgewicht des Zwischenprodukts Q und des Glycidylethers (II), umfasst;
wobei der mindestens eine Katalysator vorzugsweise ausgewählt wird aus
(i) einer Lewis-Säure, ausgewählt aus Bortrifluorid, Titantetrachlorid, Zinnchlorid, Zirconium Tetrachlorid und Komplexen davon; und
(ii) einem quartären Phosphoniumsalz der Formel R₁₂R₁₃R₁₄R₁₅P⁺X⁻, wobei R₁₂, R₁₃, R₁₄ und R₁₅ unabhängig aus linearem oder verzweigtem, substituiertem oder unsubstituiertem C₁-C₁₀-Alkyl, substituiertem oder unsubstituiertem C₆-C₁₈-Aryl und linearem oder verzweigtem, substituiertem oder unsubstituiertem C₇-C₁₈-Aralkyl ausgewählt sind und X für ein Halogenid steht; wobei weiter bevorzugt der mindestens eine Katalysator aus Bortrifluorid-Benzylaminen-Komplex und Ethyltriphenylphosphoniumbromid ausgewählt wird.

13. Verfahren nach einem der Ansprüche 10 bis 12, wobei das Zwischenprodukt (Q) Folgendes aufweist:
a. eine Viskosität im Bereich von 2000 bis 110.000 mPas, bestimmt gemäß ASTM-D7042 wobei 23 °C; und
b. ein gewichtsmittleres Molekulargewicht (M_{w}) im Bereich von 2000 bis 80.000 g/mol, ein zahlenmittleres Molekulargewicht (Mₙ) im Bereich von 1000 bis 25.000 g/mol und einem Polydispersitätsindex (PDI) im Bereich von 1,0 bis 3,0, jeweils bestimmt durch Gelpermeationschromatographie (HFIP).

14. Verwendung des Polymers P nach einem der Ansprüche 1 bis 9 als Netzmittel oder
in einer Beschichtungszusammensetzung oder
als Entschäumer oder
in einer Entschäumerzusammensetzung.

15. Entschäumerzusammensetzung, umfassend das Polymer P nach einem der Ansprüche 1 bis 9;
wobei die Entschäumerzusammensetzung vorzugsweise ferner mindestens ein Additiv umfasst, das aus Silikonöl, Mineralöl, einem Emulgierhilfsmittel, Siliciumdioxidteilchen, Wachs und Wasser ausgewählt ist.

16. Beschichtungszusammensetzung, umfassend das Polymer P nach einem der Ansprüche 1 bis 9;
wobei die Beschichtungszusammensetzung vorzugsweise ferner mindestens ein Additiv umfasst, das einem Pigmentdispergiermittel, einem Rheologiemodifikator, einem UV-Filter, einem Entschäumer, einem Verlaufmittel, einem Slipadditiv, einem Substratnetzmittel, einem Antioxidans, einem Radikalfänger, einem Biozid und einem Koaleszenzmittel ausgewählt ist.

17. Artikel, der mit einer Beschichtungszusammensetzung nach Anspruch 16 beschichtet ist.

## Revendications

1. Polymère P pouvant être obtenu par
(a) autocondensation d'au moins une N-(hydroxyalkyl)amine de formule (I), 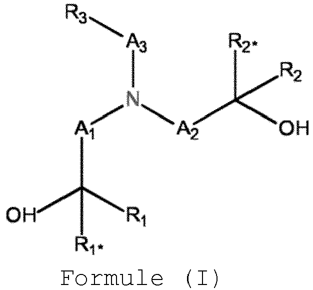
A₁, A₂ et A₃ étant identiques ou différents et étant choisis parmi C₁-C₄ alkylène non substitué, linéaire ou ramifié,
R₁, R_{1*}, R₂, et R_{2*} étant identiques ou différents et étant choisis parmi H, C₁-C₄ alkyle substitué ou non substitué, linéaire ou ramifié, C₃-C₆ cycloalkyle substitué ou non substitué, C₆-C₁₈ aryle substitué ou non substitué, et C₇-C₁₈ aralkyle substitué ou non substitué, linéaire ou ramifié,
R₃ étant choisi parmi H, C₁-C₄ alkyle substitué ou non substitué, linéaire ou ramifié, C₃-C₆ cycloalkyle substitué ou non substitué, C₆-C₁₈ aryle substitué ou non substitué, C₇-C₁₈ aralkyle substitué ou non substitué, linéaire ou ramifié, et 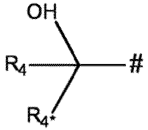 R₄ et R_{4*} étant identiques ou différents et étant choisis parmi H, C₁-C₄ alkyle substitué ou non substitué, linéaire ou ramifié, C₃-C₆ cycloalkyle substitué ou non substitué, C₆-C₁₈ aryle substitué ou non substitué, et C₇-C₁₈ aralkyle substitué ou non substitué, linéaire ou ramifié, et # indiquant un point de fixation à A₃, pour obtenir un intermédiaire (Q) ;
ou la co-condensation d'au moins une N-(hydroxyalkyl) amine de formule (I) avec Z, Z étant au moins un composé choisi parmi Z1, Z2 et Z3,
Z1 étant au moins un diol de formule
HO-R₈-OH ;
R₈ étant choisi parmi un C₂-C₁₈ alkylène substitué ou non substitué, linéaire ou ramifié et C₃-C₆ cycloalkylène substitué ou non substitué, et R₈ étant éventuellement substitué par au moins un C₁-C₃ alkyle linéaire ou ramifié, et R₈ étant éventuellement interrompu par des atomes d'oxygène,
Z2 étant un poly(oxyde d'alkylène) choisi parmi un poly(oxyde d'éthylène), un poly(oxyde de propylène), un poly(éther de tétraméthylène glycol) et des copolymères correspondants, et ayant un poids moléculaire moyen en poids (M_{w}) de 100 à 1 500 g/mole, et
Z3 étant un polyol de formule
R₁₁(OH)ₘ,
m étant un entier choisi parmi 3 à 6, et
R₁₁ étant un C₃-C₁₀ alkyle substitué ou non substitué, linéaire ou ramifié m-valent, C₄-C₁₀ cycloalkyle substitué ou non substitué, et C₇-C₁₀ aralkyle substitué ou non substitué, linéaire ou ramifié ;
pour obtenir un intermédiaire (Q) ; et
(b) mise en réaction de l'intermédiaire (Q) obtenu dans l'étape (a) avec au moins un éther de glycidyle de la formule (II), 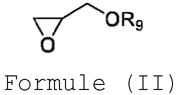
R₉ étant un C₆-C₂₀ alkyle substitué ou non substitué, linéaire ou ramifié ;
dans l'étape (b) le rapport de moles de groupes hydroxy de l'intermédiaire (Q) calculé sur la base de son indice d'hydroxyle sur les moles de l'au moins un éther de glycidyle de la formule (II) étant dans la plage de 0,03:1 à 1:3 ; et
la quantité de l'au moins une N-(hydroxyalkyl)amine de la formule (I) étant dans la plage de 10 à 90 % en poids et la quantité de l'au moins un éther de glycidyle de la formule (II) étant dans la plage de 10 à 90 % en poids, chacune basée sur le poids total du polymère P.

2. Polymère P selon la revendication 1, l'au moins une N-(hydroxyalkyl)amine de la formule (I) étant un mélange comprenant des N-(hydroxyalkyl)amines des formules (Ia) et/ou (Ib), 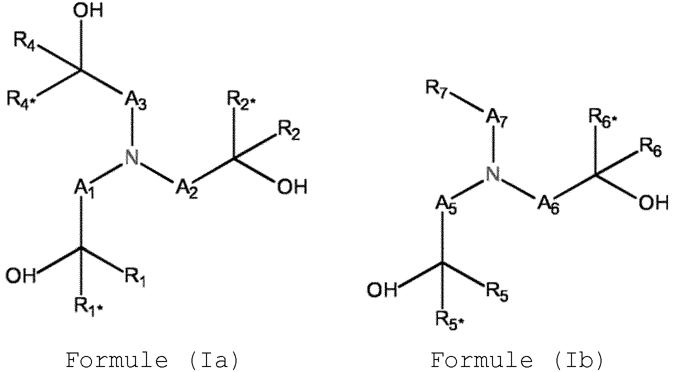
A₅, A₆ et A₇ étant identiques ou différents et étant choisis parmi C₁-C₄ alkylène non substitué,
R₅, R_{5*}, R₆ et R_{6*} étant identiques ou différents et étant choisis parmi H, C₁-C₄ alkyle substitué ou non substitué, linéaire ou ramifié, C₃-C₆ cycloalkyle substitué ou non substitué, C₆-C₁₈ aryle substitué ou non substitué, et C₇-C₁₈ aralkyle substitué ou non substitué, linéaire ou ramifié,
R₇ étant choisi parmi hydrogène, C₁-C₄ alkyle substitué ou non substitué, C₃-C₆ cycloalkyle substitué ou non substitué, C₆-C₁₈ aryle substitué ou non substitué, et C₇-C₁₈ aralkyle substitué ou non substitué, linéaire ou ramifié,
la quantité de la N-(hydroxyalkyl)amine de formule (Ia) étant dans la plage de 70 à 100 % en poids et la quantité de la N-(hydroxyalkyl)amine de formule (Ib) étant dans la plage de 0 à 30 % en poids, chacune sur la base du poids total de N-(hydroxyalkyl)amine de formule (I).

3. Polymère P selon la revendication 1 ou 2, A₁, A₂ et A₃ étant identiques ou différents et étant choisis dans le groupe constitué par méthylène, éthylène, n-propylène et isopropylène,
A₁, A₂ et A₃ étant préférablement méthylène ;
et/ou
R₁, R_{1*}, R₂, et R_{2*} étant identiques ou différents et étant choisis parmi H et méthyle ;
préférablement R₁, R_{1*}, R₂, et R_{2*} étant H ;
ou
préférablement R₁ et R₂ étant méthyle, et R_{1*} et R_{2*} étant hydrogène.

4. Polymère P selon l'une quelconque des revendications 1 à 3, R₃ étant 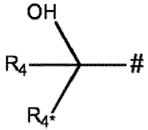 R₄ et R_{4*} étant identiques ou différents et étant choisis parmi H et méthyle ; préférablement R₃ étant -CH₂OH.

5. Polymère P selon l'une quelconque des revendications 1 à 4, R₉ étant au moins un choisi parmi hexyle, heptyle, octyle, nonyle, décyle, undécyle, dodécyle, tridécyle, tétradécyle, pentadécyle, hexadécyle, octadécyle et des mélanges correspondants.

6. Polymère P selon l'une quelconque des revendications 1 à 5, pouvant être obtenu par mise en réaction de l'intermédiaire (Q) obtenu dans l'étape (a) avec au moins un éther de glycidyle de la formule (II), 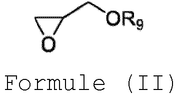
et au moins un éther de diglycidyle de formule (IIa) 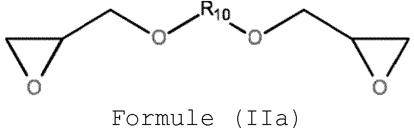
R₁₀ étant un C₃-C₂₀ alkylène substitué ou non substitué, linéaire ou ramifié, C₃-C₆ cycloalkylène substitué ou non substitué, et C₆-C₁₈ aryle substitué ou non substitué ; et
la quantité de l'au moins un éther de diglycidyle de formule (IIa) étant dans la plage de 1 à 20 % en poids par rapport à la quantité de l'éther de glycidyle de la formule (II) ;
le polymère P, pouvant préférablement être obtenu par
(a) auto-condensation de l'au moins une N-(hydroxyalkyl)amine de formule (I), 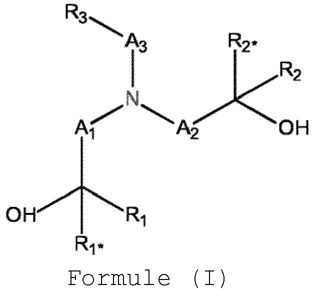
R₁, R_{1*}, R₂, et R_{2*} étant choisis parmi H et méthyle,
R₃ étant choisi parmi H, méthyle, et 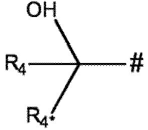 R₄ et R_{4*} étant identiques ou différents et étant choisis parmi H et méthyle ; et
A₁, A₂ et A₃ étant identiques et étant choisis parmi méthylène, éthylène, n-propylène et isopropylène, pour obtenir l'intermédiaire Q ; et
(b) mise en réaction de l'intermédiaire Q obtenu dans l'étape (a) avec l'au moins un éther de glycidyle de formule (II), 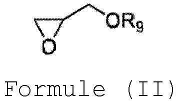
R₉ étant choisi parmi hexyle, heptyle, octyle, nonyle, décyle, undécyle, dodécyle, tridécyle, tétradécyle, pentadécyle, hexadécyle, octadécyle et des mélanges correspondants.

7. Polymère P selon l'une quelconque des revendications 1 à 6, l'au moins une N-(hydroxyalkyl)amine de formule (I) étant la triéthanolamine ; ou l'au moins une N-(hydroxyalkyl)amine de formule (I) étant la triisopropanolamine.

8. Polymère P selon l'une quelconque des revendications 1 à 6, pouvant être obtenu par
(a) auto-condensation de triéthanolamine pour obtenir l'intermédiaire Q ayant un degré de polymérisation dans la plage de 3 à 300, calculé sur la base de son indice d'hydroxy ou de la quantité d'eau collectée pendant la condensation, et
(b) mise en réaction de l'intermédiaire Q avec un mélange d'éthers de glycidyle comprenant des éthers de glycidyle de formule (IIp) et de formule (IIq) pour obtenir le polymère P,

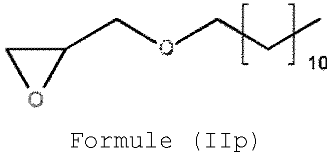

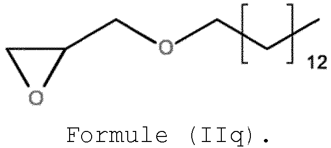

9. Polymère P selon l'une quelconque des revendications 1 à 6, pouvant être obtenu par
(a) auto-condensation de triéthanolamine pour obtenir l'intermédiaire Q ayant un degré de polymérisation dans la plage de 3 à 300, calculé sur la base de son indice d'hydroxy ou de la quantité d'eau collectée pendant la condensation, et
(b) mise en réaction de l'intermédiaire Q avec un mélange d'éthers de glycidyle comprenant des éthers de glycidyle de formule (IIp), (IIq) et (IIr) pour obtenir le polymère P,

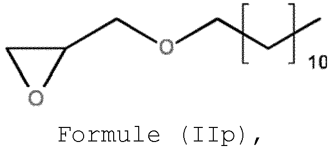

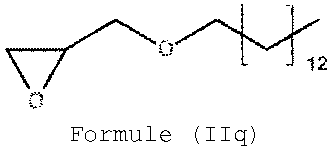

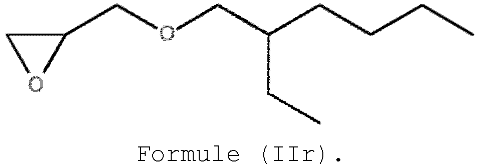

10. Procédé de préparation du polymère P selon l'une quelconque des revendications 1 à 9, le procédé comprenant au moins les étapes de,
(i) auto-condensation de l'au moins une N-(hydroxyalkyl) amine de formule (I) à une température dans la plage de 160 à 240 °C pour obtenir un intermédiaire (Q), ou
co-condensation d'au moins une N-(hydroxyalkyl)amine (I) avec Z, Z étant au moins un composé choisi parmi Z1, Z2 et Z3 à une température dans la plage de 160 à 240 °C pour obtenir un intermédiaire (Q) ;
(ii) ajout de l'au moins un éther de glycidyle (II) à l'intermédiaire (Q) à une température dans la plage de 100 à 160 °C ; et
(iii) chauffage du mélange réactionnel obtenu à l'étape (ii) à une température dans la plage de 130 à 190 °C pour obtenir le polymère ;
Z, Z1, Z2 et Z3 étant tels que définis dans les revendications 1 à 9,
le rapport pondéral de la quantité totale de l'au moins une N-(hydroxyalkyl)amine de formule (I) employée dans l'étape (i) à la quantité totale de l'éther de l'au moins un éther de glycidyle de formule (II) employée dans l'étape (ii) étant dans la plage de 1:10 à 10:1.

11. Procédé selon la revendication 10, l'étape (i) comprend en outre l'ajout d'au moins un catalyseur en une quantité dans la plage de 0,1 à 5 % en poids sur la base de la quantité de l'au moins une N-(hydroxyalkyl)amine de formule (I) ;
l'au moins un catalyseur est de préférence un acide choisi parmi l'acide phosphorique, l'acide hypophosphorique, l'acide sulfurique, l'acide triflique et l'acide toluènesulfonique.

12. Procédé selon l'une quelconque des revendications 10 ou 11, l'étape (ii) comprenant en outre l'ajout d'au moins un catalyseur en une quantité dans la plage de 0,1 à 2,0 % en poids, par rapport au poids total de l'intermédiaire Q et de l'éther de glycidyle (II) ;
l'au moins un catalyseur étant de préférence choisi parmi (i) un acide de Lewis choisi parmi le trifluorure de bore, le tétrachlorure de titane, le chlorure d'étain, le tétrachlorure de zirconium et leurs complexes ; et
(ii) un sel de phosphonium quaternaire de formule R₁₂R₁₃R₁₄R₁₅P⁺X⁻, R₁₂, R₁₃, R₁₄ et R₁₅ étant indépendamment choisis parmi C₁-C₁₀ alkyle substitué ou non substitué, linéaire ou ramifié, un groupe C₆-C₁₈ aryle substitué ou non substitué et C₇-C₁₈ aralkyle substitué ou non substitué, linéaire ou ramifié, et X étant un halogénure ;
plus préférablement, l'au moins un catalyseur étant choisi parmi un complexe benzylamine trifluorure de bore et le bromure d'éthyltriphénylphosphonium.

13. Procédé selon l'une quelconque des revendications 10 à 12, l'intermédiaire (Q) ayant
a. une viscosité dans la plage de 2 000 à 110 000 mPas, déterminée selon la norme ASTM-D7042 à 23 °C ; et
b. un poids moléculaire moyen en poids (M_{w}) dans la plage de 2 000 à 80 000 g/mole, un poids moléculaire moyen en nombre (Mₙ) dans la plage de 1 000 à 25 000 g/mol, et un indice de polydispersité (PDI) dans la plage de 1,0 à 3,0, chacun étant déterminé par chromatographie à perméation de gel (HFIP).

14. Utilisation du polymère P selon l'une quelconque des revendications 1 à 9 comme agent mouillant ; ou
dans une composition de revêtement ; ou
comme un antimousse ; ou
dans une composition antimousse.

15. Composition antimousse comprenant le polymère P selon l'une quelconque des revendications 1 à 9 ;
la composition antimousse comprenant de préférence en outre au moins un additif choisi parmi une huile de silicone, une huile minérale, un auxiliaire d'émulsification, des particules de silice, une cire et de l'eau.

16. Composition de revêtement comprenant le polymère P selon l'une quelconque des revendications 1 à 9 ;
la composition de revêtement comprenant en outre de préférence au moins un additif choisi parmi un dispersant de pigment, un modificateur de rhéologie, un filtre UV, un antimousse, un agent nivelant, un agent glissant, un agent mouillant de substrat, un antioxydant, un piégeur de radicaux, un biocide et un agent de coalescence.

17. Article revêtu par une composition de revêtement selon la revendication 16.
